(19) Europäisches Patentamt
European Patent Office
Office européen des brevets

(11) Publication number : **0 357 702 B1**

# (12) EUROPEAN PATENT SPECIFICATION

(45) Date of publication of patent specification : **12.08.92 Bulletin 92/33**

(51) Int. Cl.$^5$ : **C09K 19/20**, C09K 19/14

(21) Application number : **89901464.1**

(22) Date of filing : **09.01.89**

(86) International application number : **PCT/EP89/00011**

(87) International publication number : **WO 89/06678 27.07.89 Gazette 89/16**

## (54) FLUORINATED OLIGOPHENYL DERIVATIVES.

(30) Priority : **14.01.88 GB 8800800**
**14.01.88 GB 8800801**
**11.11.88 GB 8826468**

(43) Date of publication of application : **14.03.90 Bulletin 90/11**

(45) Publication of the grant of the patent : **12.08.92 Bulletin 92/33**

(84) Designated Contracting States : **CH DE FR GB IT LI**

(56) References cited :
**EP-A- 268 198**
**EP-A- 0 188 222**
**FR-A- 2 309 509**
**FR-A- 2 466 496**
**"Flüssige Kristalle in Tabellen II" Ed.: D.Demus, H.Zaschke, Leipzig 1984**

(73) Proprietor : **MERCK PATENT GESELLSCHAFT MIT BESCHRÄNKTER HAFTUNG**
**Frankfurter Strasse 250 Postfach 4119**
**W-6100 Darmstadt (DE)**

(72) Inventor : **COATES, David**
**87 Sopwith Crescent Merley**
**Wimborne Dorset BH21 3SW (GB)**
Inventor : **SAGE, Ian, Charles**
**58 Wentworth Drive Broadstone**
**Dorset BH18 8EG (GB)**
Inventor : **GREENFIELD, Simon**
**2 Blackbird Close Creekmoor**
**Poole BH17 7YA (GB)**

**EP 0 357 702 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to chiral tilted smectic liquid crystal medium comprising at least two liquid crystalline compounds, wherein at least one compound is of the formula I

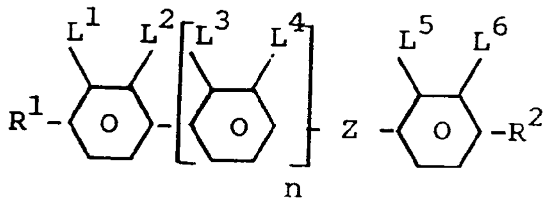

I

wherein

$R^1$ and $R^2$ are each alkyl with 1-15 C atoms, and wherein one or two non-adjacent $CH_2$ groups can also be replaced by a bridging element selected from the group consisting of -O-, -S-, -CHHalogen-, -CHCN-, -CH=CH-, and combinations of these bridging elements, with the proviso that two hetero atoms are not directly linked,

Z is -CO-O-, -O-CO-, $-CH_2O-$, $-O-CH_2-$ or $-CH_2CH_2-$, n is 0 or 1, and

$L^1$ through $L^6$ are each hydrogen or fluorine, at least one of $L^1$ through $L^4$ being fluorine with the provisos that

a) one of $L^5$ and $L^6$ is fluorine and the other is hydrogen and one of $L^1$ and $L^2$ is hydrogen and the other is fluorine or hydrogen, if n = 0 and Z is -CO-O-, and

b) one of $L^1$ and $L^2$ is fluorine and the other is hydrogen and one of $L^5$ and $L^6$ is hydrogen and the other is fluorine or hydrogen, if n = 0 and Z is -O-CO-.

Chiral tilted smectic liquid crystal phases with ferroelectric properties can be prepared by adding a suitable chiral doping substance to base mixtures with one or more tilted smectic phases (L.A. Beresnev et al., Mol. Cryst. Liq. Cryst. 89, 327 (1982); H.R. Brand et al., J. Physique 44 (Lett.), L-771 (1983)). Such phases can be used as dielectrics for rapidly switching displays based on the principle of SSFLC technology described by Clark and Lagerwall (N.A. Clark and S.T. Lagerwall, Appl. Phys. Lett. 36, 899 (1980); U.S. Patent Specification 4,367,924) on the basis of ferroelectric properties of the chirally tilted phase. In this phase, the longitudinally stretched molecules are arranged in layers, the molecules having a tilt angle relative to the normal of the layers. On advancing from layer to layer, the tilt direction changes by a small angle in respect of an axis vertical to the layers, so that a helix structure is formed. In displays based on the principle of SSFLC technology, the smectic layers are arranged vertically to the plates of the cell. The helical arrangement of the tilt direction of the molecules is suppressed by a very small distance between the plates (about 1-2 μm). The longitudinal axes of the molecules are thereby forced to align themselves in a plain parallel to the plates of the cell, which means that two distinct tilt orientations result.

By applying a suitable alternating electrical field, a system can be switched back and forth between these two states in the liquid crystal phase which exhibits spontaenous polarization. This switching process is considerably more rapid than in conventional twisted cells (TN-LCDs) based on nematic liquid crystals.

A great disadvantage for many applications of the materials currently available with chirally tilted smectic phases (such as, for example, $S_C$*, but also $S_H$*, $S_I$ *, $S_J$*, $S_K$*, $S_G$* and $S_F$*) is their low chemical, heat and light stability. Another adverse property of displays based on the chirally tilted smectic mixtures currently available is that values of the spontaneous polarization are too low, so that the switch time properties of the displays are adversely influenced and/or the pitch and/or the tilt and/or the viscosity of the phases do not meet the requirements of display technology. Moreover, the temperature range of the ferroelectric phases is usually too small and is predominantly at temperatures which are too high.

It has now been found that the use of compounds of the formula I as components of chirally tilted smectic mixtures can substantially reduce the disadvantages mentioned. The compounds of the formula I are thus outstandingly suitable as components of chirally tilted smectic liquid crystal phases. In particular, chirally tilted smectic liquid crystal phases which are particularly chemically stable, have favourable ferroelectric phase ranges and favourable viscosity values, in particular broad $S_C$* phase ranges, have an outstanding behaviour on supercooling down to temperatures below 0 °C without crystallization occurring and high spontaneous polarization values for such phases can be prepared with the aid of these compounds.

The compounds of the formula I have a wide range of applications. Depending on the choice of substituents, these compounds can be used as base materials from which liquid crystal smectic phases are predominantly composed; however, it is also possible for compounds of the formula I to be added to liquid crystal base materials from other classes of compounds for example in order to vary the dielectric and/or optical anisotropy and/or

the viscosity and/or the spontaneous polarization and/or the phase ranges and/or the tilt angle and/or the pitch of such a dielectric.

Partially the compounds of the formula I are known is components of nematic liquid crytalline phases (for example: "Flüssige Kristallen in Tabellen II", Ed. D. Demus, H. Zaschke, Leipzig 1984, p. 134 and FR-A-2 466 496); partially the compounds of the formula I are new. In the European patent application EP-A-0 188 222 (corresponding to J6 1229841) and the Japanese laid open application J6 2030740 optically active flourinated phenyl biphenylcarboxylates and phenyl benzoates are diclosed as dopants for ferroelectric liquid crystalline phases. Those compounds are not suitable for the development of modern ferroelectric mixtures, because their spontaneous polarization and mesogenic properties don not fulfill today's requirements.

In the German laid open application a broad general formula of non-optically active compounds is claimed embracing partially the compounds according to the invention, but no single species of formula I is disclosed.

No information at all is given there which indicates that these compounds can be used as components of chirally tilted smectic mixtures for ferroelectric displays based on, for example, the SSFLC technology described by Clark and Lagerwall.

EP-A-0 268 198 being prior art persuant Article 54 (3) (4) EPC claims ferroelectric mixtures containing rod-like alkenyl compounds. There is no single compound with a lateral fluorine substituent disclosed.

The invention relates to chiral tilted smectic liquid crystal media containing at least one compound of the formula I and liquid crystal display elements, in particular ferroelectric electrooptical display elements, containing such media.

Furthermore the invention relates to compounds of the formulae Ia and Ib

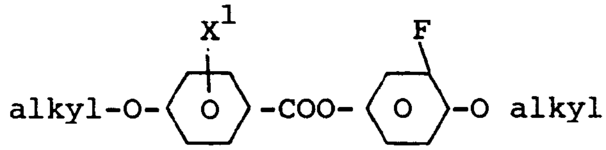

Ia

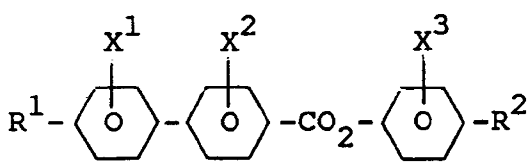

Ib

wherein $R^1$ and $R^2$ have the meaning given, and
$X^1$ through $X^3$ are each hydrogen or fluorine.

In the compounds of the formula Ia $X^1$ is fluorine, in the compounds of the formula Ib at least two of $X^1$ to $X^3$ are fluorine.

For simplicity, in the following text Cy is a 1,4 cyclohexylene group, Dio is a 1,3-dioxane-2,5-diyl group, Phe is a 1,4-phenylene group, Pym is a pyrimidine-2,5-diyl group and Pyr is a pyridine-1,5-diyl group, it being possible for Cy and/or Phe to be unsubstituted or substituted by one or two F and/or Cl atoms and/or $CH_3$ groups and/or CN groups.

PheF denotes a 2(3)-monofluoro-1,4-phenylene group.

Particularly preferred chiral tilted smectic liquid crystal phases according to the invention are those in which the achiral base mixture contains, in addition to compounds of the formula I, at least one other component with a negative or comparatively low positive dielectric anisotropy. This/these other component(s) of the achiral base mixture can make up 10 to 99 %, preferably 50 to 95 %, of the base mixture. Suitable further components with a comparatively low positive or negative dielectric anisotropy are compounds of the formulae 1 to 6.

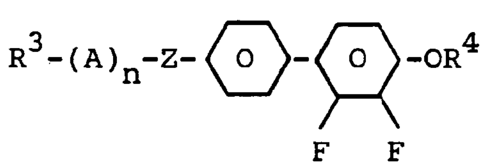

1

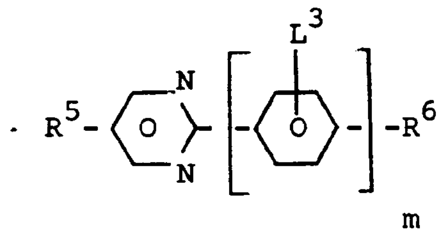

2

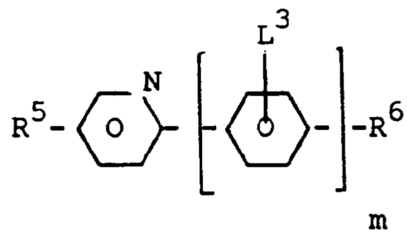

3

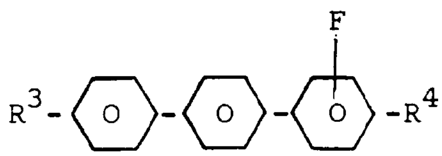

4

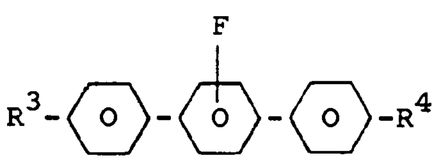

5

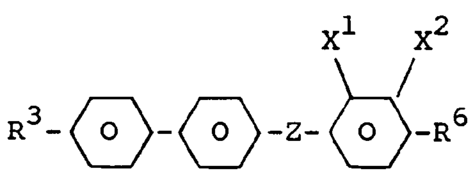

6

wherein $R^3$ and $R^6$ are each alkyl or alkoxy with 5 to 15 C atoms,
Z is -CO-O- or a single bond,
$X^1$, $X^2$ and $L^3$ is hydrogen or fluorine,
$R^4$ and $R^5$ are each alkyl with 5 to 15 C atoms, m is 1 or 2, n is 0 or 1 and
A is 1,4-cyclohexylene or 1,4-bicyclo[2.2.2]octylene.

The phases according to the invention contain preferably at least three and in particular at least five compounds of the formula I. Particularly preferred chirally tilted smectic liquid crystal phases according to the invention are those in which the achiral base mixture contains, in addition to compounds of the formula I, at least one other component with a negative or comparatively low positive dielectric anisotropy. This/these other component(s) of the chiral base mixture can make up 1 to 50 %, preferably 10 to 25 %, of the base mixture. Suitable further components with a comparatively low positive or negative dielectric anisotropy are compounds of the formula II, which include the compounds of the part formula IIa to IIi:

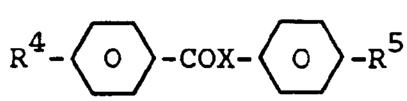

IIa

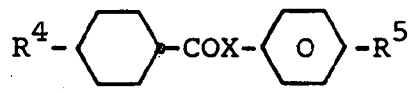 IIb

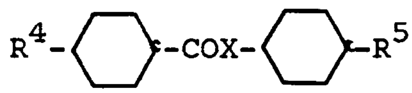 IIc

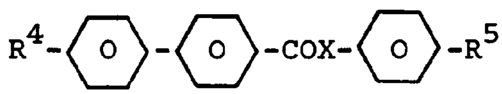 IId

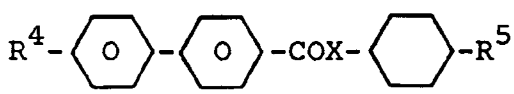 IIe

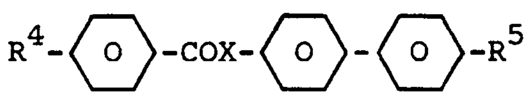 IIf

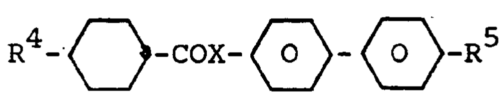 IIg

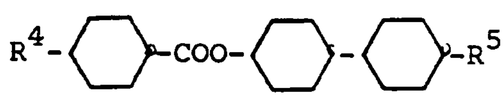 IIh

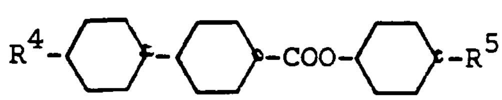 IIi

$R^4$ and $R^5$ are in each case preferably straight-chain alkyl, alkoxy, alkanoyloxy or alkoxycarbonyl with in each case 3 to 12 C atoms. X is preferably 0. In the compounds of the formulae IIa, IIb, IId, IIe, IIf and IIg, it is also possible for a 1,4-phenylene group to be laterally substituted by halogen or CN, particularly preferably by fluorine.

Particularly preferred compounds are those of the part formulae IIa, IIb, IId and IIf, wherein $R^4$ and $R^5$ are each straight-chain alkyl or alkoxy with in each case 5 to 10 C atoms.

Particularly preferred individual compounds are shown in the following table:

| Formula | $R^4$ | $R^5$ | X |
|---|---|---|---|
| IIa | n-decyloxy | n-heptyloxy | O |
| IIa | n-hexyloxy | n-decyloxy | O |
| IIa | n-octyloxy | n-heptyl | O |
| IIa | n-octyloxy | n-pentyl | O |

| Formula | $R^4$ | $R^5$ | X |
|---|---|---|---|
| IIa | n-decyloxy | n-heptyl | O |
| IIa | n-decyloxy | n-pentyl | O |
| IIf | n-pentyl | n-pentyl | O |
| IIf | n-pentyl | n-hexyl | O |

The compounds of the part formulae IIc, IIh and IIi are suitable as additives for lowering the melting point and are usually added to the base mixtures in an amount of not more than 5 %, preferably 1 to 3 %. $R^4$ and $R^5$ in the compounds of the part formulae IIc, IIh and IIi are preferably straight-chain alkyl with 2 to 7, preferably 3 to 5 C atoms. Another class of compound which is suitable for lowering the melting point in the phases according to the invention is that of the formula

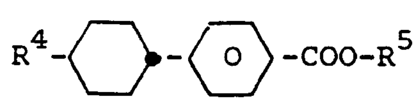

wherein $R^4$ and $R^5$ have the preferred meaning given for IIc, IIh and IIi.

Suitable further components with negative dielectric anisotropy are furthermore compounds containing the structural element A, B or C

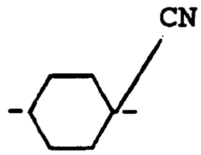

A

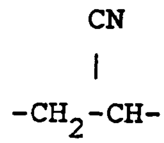

B

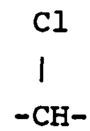

C

Preferred compounds of this type correspond to the formulae IIIa, IIIb and IIIc:

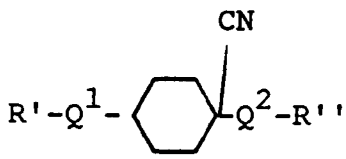

IIIa

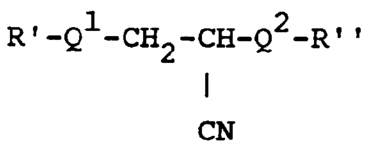

IIIb

$$R'\text{-}Q^3\text{-}Q^4\text{-}R''' \quad \text{IIIc}$$

R′ and R″ are each preferably straight-chain alkyl or alkoxy groups with in each case 2 to 10 C atoms. $Q^1$ and $Q^2$ are each 1,4-phenylene, trans-1,4-cyclohexylene, 4,4′-biphenylyl, 4-(trans-4-cyclohexyl)-phenyl or trans, trans-4,4′-bicyclohexyl, or one of the groups $Q^1$ and $Q^2$ may also be a single bond.

$Q^3$ and $Q^4$ are each 1,4-phenylene, 4,4′-biphenylyl or trans-1,4-cyclohexylene. One of the groups $Q^3$ and $Q^4$ can also be 1,4-phenylene, at least one CH group being replaced by N. R‴ is an optically active radical with an asymmetric carbon atom of the structure

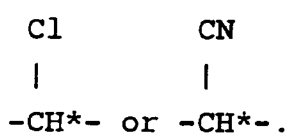

or .

Particularly preferred compounds of the formula IIIc are those of the formula IIIc′:

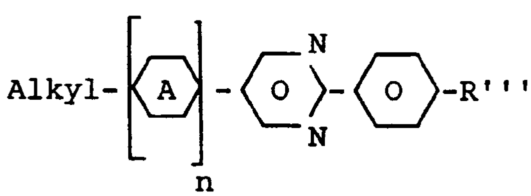

IIIc'

wherein A is 1,4-phenylene or trans-1,4-cyclohexylene and n is 0 or 1.

The compounds of the formula I include preferred compounds with two rings of the part formulae Ia-Ic

$$R^1\text{-PheF-Z-Phe-}R^2 \quad \text{Ia}$$
$$R^1\text{-Phe-Z-PheF-}R^2 \quad \text{Ib}$$
$$R^1\text{-PheF-Z-PheF-}R^2 \quad \text{Ic}$$

and compounds with three rings of the part formulae Ic-Ii

$R^1$-PheF-Phe-Z-Phe-$R^2$ Ic
$R^1$-Phe-PheF-Z-Phe-$R^2$ Id
$R^1$-Phe-Phe-Z-PheF-$R^2$ Ie
$R^1$-PheF-PheF-Z-Phe-$R^2$ If
$R^1$-PheF-Phe-Z-PheF-$R^2$ Ig
$R^1$-Phe-PheF-Z-PheF-$R^2$ Ih
$R^1$-PheF-PheF-Z-PheF-$R^2$ Ii

Therefore, the compounds of the formula I include dinuclear and trinuclear materials. Of the dinuclear materials, those wherein $R^1$ is n-alkyl and $R^2$ is n-alkyloxy are preferred.

Compounds of the formula I where $R^1$ = n-heptyl or n-octyl impart good low temperature properties to the phases according to the invention, whilst the corresponding compounds with $R^1$ = n-nonly are capable of increasing the $S_A/S_C$ transition temperature of the phases according to the invention.

Preferred phases according to the invention contain at least one compound of the formula I wherein $R^1$ is n-nonyl and at least one compound of the formula I wherein $R^1$ is n-heptyl or n-octyl. Particularly preferred phases according to the invention are those containing compounds of the formula I wherein $R^1$ is n-heptyl, n-octyl or n-nonyl. $R^2$ in the dinuclear compounds of the formula I is preferalby n-alkoxy with 6 to 12, in particular with 7 to 10 C atoms. The phases according to the invention preferably contain at least one compound of the formula I wherein $R^2$ is n-hexyloxy, n-heptyloxy or n-octyloxy (preferably n-heptyloxy or n-octyloxy) and at least one compound of the formula I wherein $R^2$ is n-nonyloxy or n-decyloxy. The sum of the C atoms in the groups $R^1$ and $R^2$ of the preferred dinuclear compounds of the formula I is preferably 15 or more, particularly preferably in the range from 15 to 20. Particularly preferred dinuclear individual compounds of the formula I are listed in the following table:

| $R^1$ | $R^2$ | Z |
|---|---|---|
| n-nonyl | n-nonyloxy | $CH_2CH_2$ |
| n-nonyl | n-hexyloxy | $CH_2CH_2$ |
| n-octyl | n-decyloxy | $CH_2CH_2$ |
| n-octyl | n-octyloxy | $CH_2CH_2$ |
| n-octyl | n-heptyloxy | $CH_2CH_2$ |
| n-heptyl | n-decyloxy | $CH_2CH_2$ |
| n-heptyl | n-nonyloxy | $CH_2CH_2$ |
| n-pentyloxy | n-octyl | $OCH_2$ |
| n-hexyloxy | n-hexyl | $OCH_2$ |
| n-hexyloxy | n-pentyl | $OCH_2$ |
| n-pentyloxy | n-nonyl | $OCH_2$ |
| n-octyloxy | n-octyl | $OCH_2$ |
| n-nonyl | n-nonyloxy | COO |
| n-nonyl | n-hexyloxy | COO |
| n-octyl | n-decyloxy | COO |
| n-octyl | n-octyloxy | COO |

| | | |
|---|---|---|
| n-octyl | n-heptyloxy | COO |
| n-octyl | n-octyl | COO |
| n-heptyl | n-octyloxy | COO |
| n-heptyloxy | n-octyl | COO |
| n-heptyl | n-decyloxy | COO |
| n-heptyl | n-nonyloxy | COO |
| n-pentyloxy | n-octyl | COO |
| n-hexyloxy | n-hexyl | COO |
| n-hexyloxy | n-hexlyoxy | COO |
| n-hexyloxy | n-heptyloxy | COO |
| n-hexyloxy | n-octyloxy | COO |
| n-hexyloxy | n-nonyloxy | COO |
| n-octyloxy | n-pentyl | COO |
| n-octyloxy | n-hexyloxy | COO |
| n-octyloxy | n-heptyloxy | COO |
| n-octyloxy | n-octyloxy | COO |
| n-octyloxy | n-nonyloxy | COO |

| | | |
|---|---|---|
| n-octyloxy | n-octyl | COO |
| n-pentyloxy | n-nonyl | COO |
| n-octyloxy | n-octyl | COO |
| n-heptyloxyl | n-hexyloxy | COO |
| n-heptyloxy | n-heptyloxy | COO |
| n-heptyloxy | n-octyloxy | COO |
| n-heptyloxy | n-nonyloxy | COO |
| n-nonyloxy | n-hexyloxy | COO |
| n-nonyloxy | n-heptyloxy | COO |
| n-nonyloxy | n-octyloxy | COO |
| n-nonyloxy | n-nonyloxy | COO |

Compounds of the formula I which are furthermore preferred are those wherein $R^1$ is n-alkyl with 7 to 10 C atoms and $R^2$ is n-alkylthio with 5 to 10 C atoms.

Phases according to the invention which are furthermore preferred are those containing at least one dinuclear compound of the formula I wherein $R^1$ is n-alkyl with 7 to 10 C atoms and $R^2$ is $-CH_2O-(CH_2)_p-CH_3$ or $-O-(CH_2)_q-O-(CH_2)_r-CH_3$.p is preferably 4 to 10, in particular 5 to 9. q is preferably 1 or 2, particularly preferably 2. r is 4 to 10, particularly preferably 5 to 9. q can also be > 2, for example 3 to 5.

These phases according to the invention preferably contain at least one trinuclear compound of the formula I and/or one compound of the formula I wherein $R^2$ is n-alkylthio. These phases are distinguished by particularly high $S_C/S_A$ transition temperatures.

Smaller preferred groups of trinuclear compounds of the formula I are those of the formula I1 to I7:

I1
alkyl-PheF-Phe-CO-O-Phe-alkyl
alkyl-PheF-Phe-CO-O-Phe-alkoxy
alkoxy-PheF-Phe-CO-O-Phe-alkyl
I2
alkyl-Phe-PheF-CO-O-Phe-alkyl
alkyl-Phe-PheF-CO-O-Phe-alkoxy
alkoxy-Phe-PheF-CO-O-Phe-alkyl
I3
alkyl-Phe-Phe-CO-O-PheF-alkyl
alkyl-Phe-Phe-CO-O-PheF-alkoxy
alkoxy-Phe-Phe-CO-O-PheF-alkyl
I4

alkyl-PheF-Phe-CO-O-PheF-alkyl
alkyl-PheF-Phe-CO-O-PheF-alkoxy
alkoxy-PheF-Phe-CO-O-PheF-alkyl

I5

alkyl-Phe-PheF-CO-O-PheF-alkyl
alkyl-Phe-PheF-CO-O-PheF-alkoxy
alkoxy-Phe-PheF-CO-O-PheF-alkyl

I6

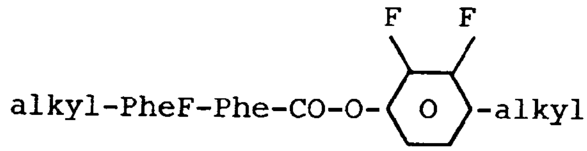

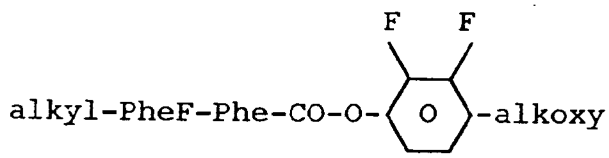

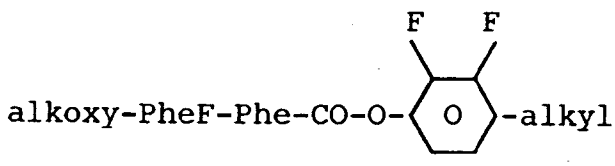

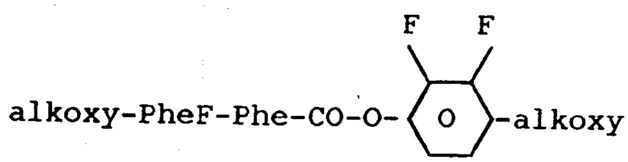

I7

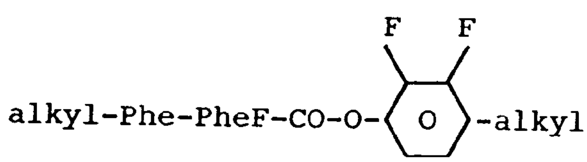

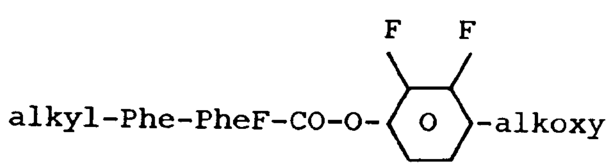

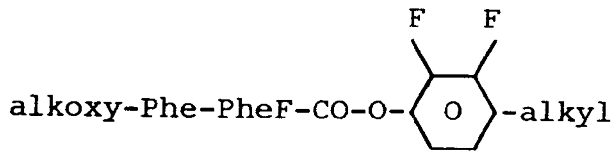

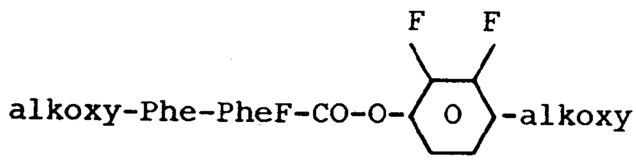

Phases according to the invention which are furthermore preferred are those containing at least one compound of the formula

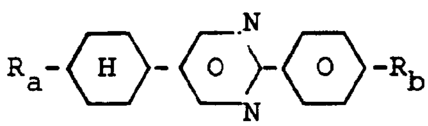 or 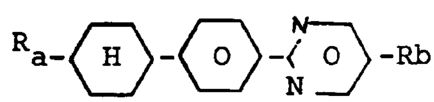

wherein $R_a$ is alkyl with 3 to 12 C atoms and $R_b$ is alkyl or alkoxy with in each case 5 to 12 C atoms. $R_a$ and $R_b$ together contain at least 15 C atoms, preferably at least 17 C atoms.

A particularly preferred chiral tilted smectic liquid crystal phase with at least one compound of the formula I according to claim 1 is characterized in that it contains a liquid crystal component with negative dielectric anisotropy, and in particular is a phase according to the invention, characterized in that it contains at least one compound containing the structural element A, B or C as component with negative dielectric anisotropy.

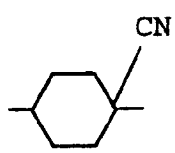

A

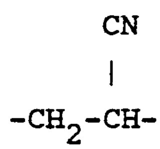

B

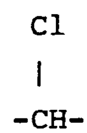

C

A particular preferred phase according to the invention is furthermore charcterized in that it contains at least one compound of the formula II

$$R^4\text{-}A^1\text{-COX-}A^2R^5 \quad \text{II}$$

wherein

$R^4$ and $R^5$ are each alkyl with 1-15 C atoms, it also being possible for one or two non-adjacent $CH_2$ groups to be replaced by -O-, -CO-, -O-CO-, -CO-O- and/or -CH=CH-,

X is O or S and

$A^1$ and $A^2$ are each 1,4-phenylene or trans-1,4-cyclohexylene, or one of the groups $A^1$ and $A^2$ is optionally also 4,4′-biphenylyl or trans, trans-4,4′-bicyclohexyl.

Other preferred ferroelectric phases according to the invention are those which contain at least one compound of the formula V

$$R^1\text{-}Q^1\text{-A-}(Q^2)_q\text{-}R^2 \quad \text{V}$$

wherein $R^1$ and $R^2$ independently of one another are each a straight-chain alkyl group having 1 to 15 C atoms, wherein furthermore one or more non-adjacent $CH_2$ groups may be replaced by -O-, -S-, -CO-, $CHCH_3$-O-, $CHCH_3$-, -CH-halogen-, -CHCN-, -O-CO-, O-COO-, -CO-O- and/or -CH=CH-,

A is

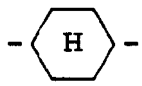,
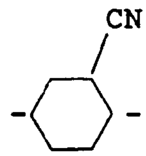,
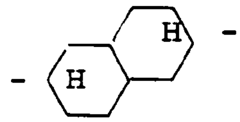

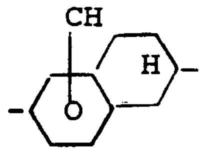
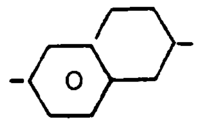
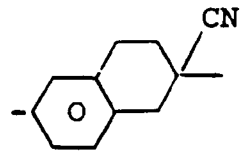

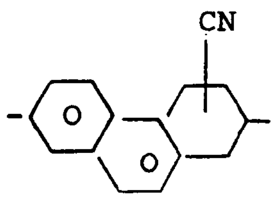
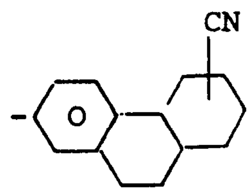

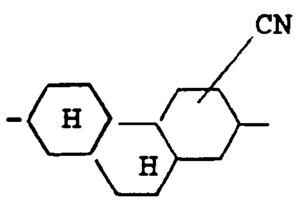
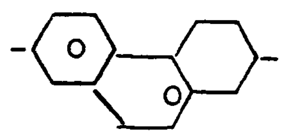

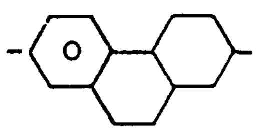
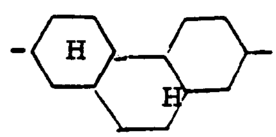

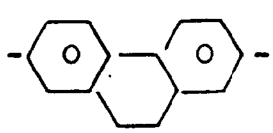
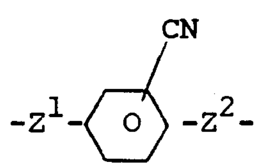

or

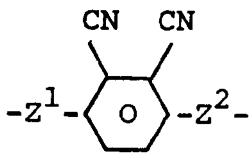

q is 0 or 1,

$Q^1$ and $Q^2$ independently of another are each $(A°-Z°)_p$-,

wherein A° is 1,4-cyclohexylene which is unsubstituted or monosubstituted or polysubstituted by halogen atoms, $CH_3$ groups and/or nitrile groups, and wherein futhermore one or two non-adjacent $CH_2$ groups may be replaced by -O- and/or -S-and/or a

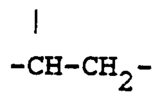

grouping may be replaced by

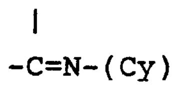

or is 1,4-phenylene which is unsubstituted or monosubstituted or polysubstituted by halogen atoms, $CH_3$ groups and/or nitrile groups, wherein furthermore one or more CH groups may be replaced by N (Phe), and one of the radicals A° may furthermore be 2,5-naphthylene (Na) or tetrahydro-2,6-naphthylene (4H-Na), if appropriate substituted by halogen or CN,

Z°, $Z^1$ and $Z^2$ independently of one another are each -CO-O-, -O-CO-, $CH_2O$-, $OCH_2$-, $CH_2CH_2$-, -CHCNCH$_2$-, $CH_2$-CHCN- or a single bond, and p is 1, 2 or 3 or, where A is tetra- or octahydrophenanthrene, also 0, and where A is

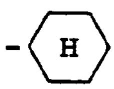, 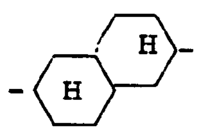

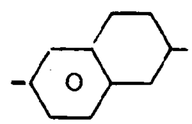

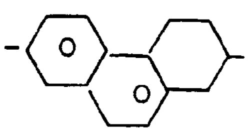

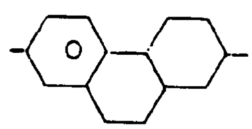

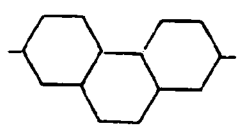

or

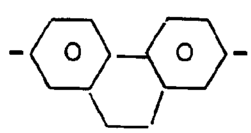

at least one group Z° is $-CHCNCH_2$ or $-CH_2CHCN-$ and/or at least one $CH_2$ group in at least one of the groups $R^1$ and $R^2$ is replaced by -CHCN-.

The compounds of the formula V can have straight-chain or branched wing groups $R^1$ and/or $R^2$. Compounds possessing branched wing groups can be used in the form of the race-mate or as optically active compounds. Achiral base mixtures of compounds of the formula V and, if appropriate, further archiral components can be doped with chiral compounds of the formula I or additionally with other chiral compounds, in order to obtain chirally tilted smectic phases.

Particularly preferred smaller groups of compounds are those of the formula V1 to V8:

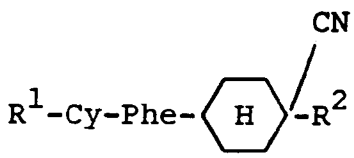

V1

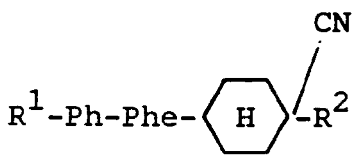

V2

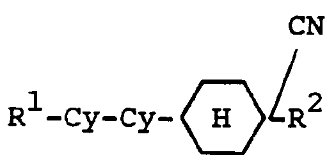

V3

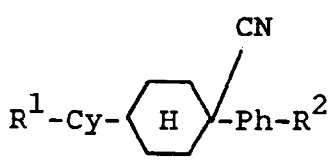

V4

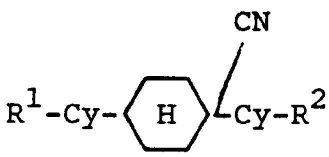

V5

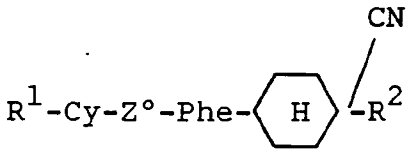

V6

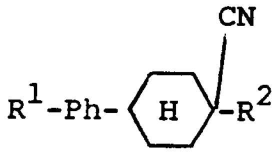

V7

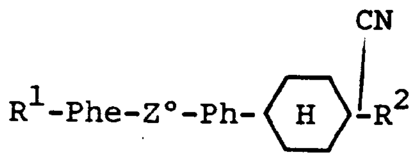

V8

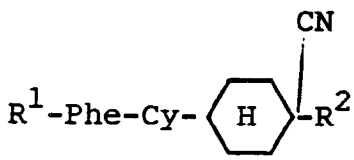

V9

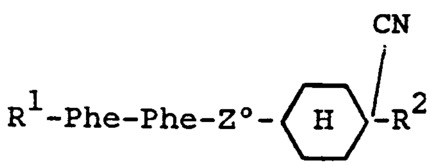

V10

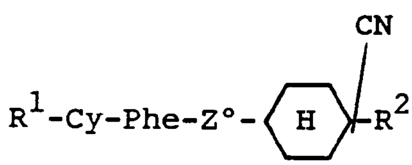

V11

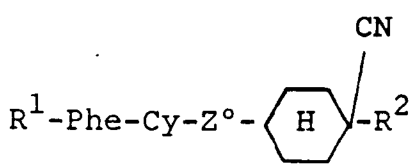

V12

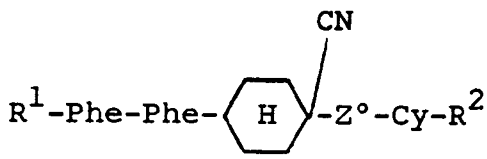

V13

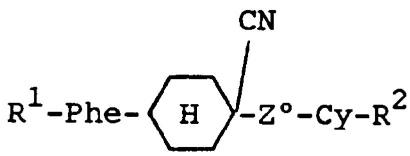

V14

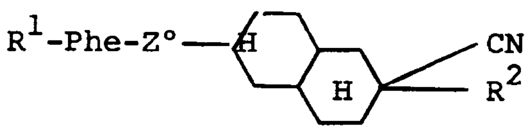

V15

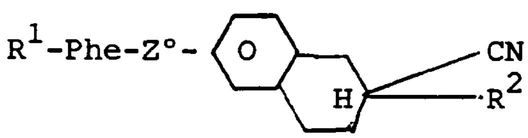

V16

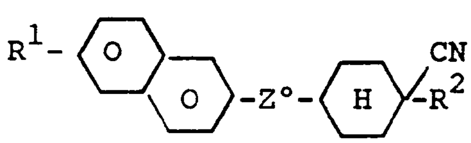

V17

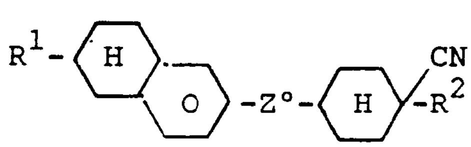

V18

Another particularly preferred smaller group of compounds comprises those of the formulae V19 to V22:

$R^1$-A°-Cy-$(CH_2)_r$-CHCN-$C_sH_{2s+1}$ V19

$R^1$-A°-A°-Cy-$(CH_2)_r$-CHCN-$C_sH_{2s+1}$ V20

$R^1$-A°-A°-CHCN-$CH_2$-Cy-$R^2$ V21

$R^1$-A°-A°-$CH_2$CHCN-Cy-$R^2$ V22

wherein

r is 0, 1, 2 or 3 and
(r+s) is 1 to 14.

Particularly preferred chiral dopants are those of formula VI

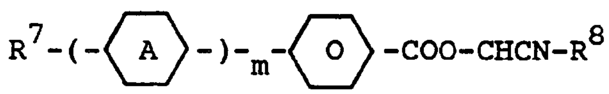

VI

wherein $R^7$ is alkyl or alkoxy with 5 to 15 C atoms. $R^8$ is alkyl with 1 to 8 C atoms, m is 1 or 2, and - A - is 1,4-phenylene optionally substituted by fluorine, pyridine-2,5-diyl, pyrimidine-2,5-diyl or trans-1,4-cyclohexylene.

All components of the phases according to the invention are either known or can be prepared in a manner known per se, analogously to known compounds.

Compounds of the formula I which do not possess any $S_c$ phases are likewise suitable as components of smectic phases according to the invention.

The phases according to the invention may furthermore contain compounds of the formula

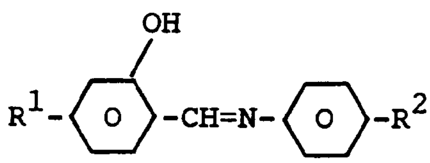

wherein

$R^1$ and $R^2$ have the meaning given in the case of formula V

preferred phases according to the invention are those which contain in addition to the compounds of the formula I further fluorinated components, in particular compounds, which exhibit the following structure elements of the formulae D to G:

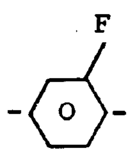

D

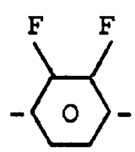

E

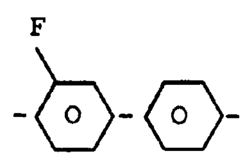

F

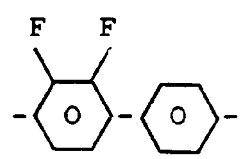

G

All components of the phases according to the invention are either known or can be prepared in a manner known per se, analogously to known compounds.

Esters of the formula I can be obtained by esterification of corresponding carboxylic acids (or their reactive derivatives) with phenols (or their reactive derivates).

The corresponding carboxylic acids and phenols are known or can be prepared by processes analogous to known processes.

Particulary suitable reactive derivatives of the carboxylic acids mentioned are the acid halides, above all the chlorides and bromides, and furthermore the anhydrides, for example also mixed anhydrides, azides or esters, in particular alkyl esters with 1 - 4 C atoms in the alkyl group.

Possible reactive derivatives of the alcohols or phenols mentioned are, in particular, the corresponding metal phenolates, preferably of an alkali metal, such as sodium or potassium.

The esterification is advantageously carried out in the presence of an inert solvent. Particularly suitable solvents are ethers, such as diethyl ether, di-n-butyl ether, THF, dioxane or anisole, ketones, such as acetone, butanone or cyclohexanone, amides, such as dimethylformamide or phosphoric acid hexamethyltriamide, hydrocarbons, such as benzene, toluene or xylene, halogenohydrocarbons, such as dichlormethane carbon tetrachloride or tetrachloroethylen, and sulfoxides, such as dimethylsulfoxide or sulfolane. Water-immiscible solvents can simultaneously be advantageously used for azeotropic distillation of the water formed during the esterification. An excess of an organic base, for example pyridine, quinoline or triethylamine, can occasionally also be used as the solvent for the esterification. The esterification can also be carried out in the absence of

a solvent, for example by heating the components in the presence of sodium acetate. The reaction temperature is usually between -50° and +250°, preferable between -20° and +80°. At these temperatures, the esterification reactions have as a rule ended after 15 minutes to 48 hours.

In detail, the reaction conditions for the esterification depend largely on the nature of the starting substances used. Thus, a free carboxylic acid is as a rule reacted with a free alcohol or phenol in the presence of a strong acid, for example a mineral acid, such as hydrochloric acid or sulfuric acid. A preferred reaction procedure is the reaction of an acid anhydride or, in particular, an acid chloride with an alcohol, preferably in a basic medium bases which are of importance being, in particular, alkali metal hydroxides, such as sodium hydroxide or potassium hydroxide, alkali metal carbonates or bicarbonates, such as sodium carbonate, sodium bicarbonate, potassium carbonate or potassium bicarbonate, alkali metal acetates, such as sodium acetate or potassium acetate, alkaline earth metal hydroxides, such as calcium hydroxide, or organic bases, such as triethylamine, pyridine, lutidine, collidine or quinoline. Another preffered embodiment of the esterification comprises first converting the alcohol or phenol into the sodium alcoholate or phenolate or potassium alcoholate or phenolate, for example by treatment with ethanolic sodium hydroxide solution or potassium hydroxide solution, isolating this product and suspending it in acetone or diethyl ether, together with sodium bicarbonate or potassium carbonate, with stirring, and adding a solution of the acid chloride or anhydride in diethyl ether, acetone or dimethylformamide to this suspension, advantageously at temperatures between about -25° and +20°.

A further preferred reaction procedure is the reaction of an acid with an alcohol in an inert solvent in the presence of a water binding material, e.g. molecular sieves or carbodiimides, preferably dicyclohexylcarbodiimide (DCC).

The compounds of the groups I6 to I7

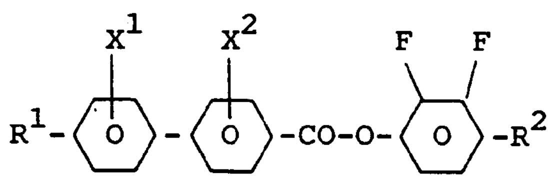

are obtained by esterification of the corresponding fluorinated biphenylcarboxylic acid with 4-alkyl- or alkoxy-2,3-difluorophenols.

These are prepared by oxidation of the corresponding 3-alkyl- or alkoxy-1,2-difluorbenzene.

Oxidation is achieved, for example, by treating the corresponding 4-alkyl- or alkoxy-2,3-difluorophenyl-lithium (Gilman, H., Soddy, T.S., J. Org. Chem., 22, 1715, (1957)) with trialkoxyborates and cleaving the boronic acid with $H_2O_2$, or treating it with lithium tert. butoxide or with oxygen.

The phases according to the invention are prepared in a manner with is customary per se. As a rule, the components are dissolved in one another, advantageously at elevated temperature.

The liquid crystal phases according to the invention can be modified by suitable additives so that they can be used in all the types of liquid crystal display elements hitherto disclosed.

The liquid crystal materials of this invention may be used in liquid crystal electrooptical display devices of known construction (for example U.S. Patent 4,367,924) or in liquid crystal electro-optical display devices which are modifications of the known ones.

The following examples are intended to illustrate the invention without limiting it. Percentages above and below are percentages by weight; all the temperatures are stated in degrees Celsius. The symbols are furthermore as follows: Cr: crystalline solid state; S: smectic phase (the index charcterizes the phase type), N: smectic state, Ch: cholesteric phase, I: isotropic phase. The figure between two symbols indicates the transition temperature in degrees Celsius. $P_s$ indicates the spontaneous polarisation in nC $cm^{-2}$ at the given temperature.

Example 1

Preparation of (4-octoxy-3-fluorophenyl)-boronic acid

A mixture of 4-bromo-2-fluoro-octoxybenzene (95 g) (obtained by bromination of 2-fluoro-octoxybenzene) and tetrahydrofurane (250 ml) is slowly added to a mixture of magnesium turnings (8.5 g) and tetrahydrofurane (50 ml) containing a crystal of iodine. After refluxing and stiring for 1 hour the reaction mixture is transferred via a flexineedle into a solution of tri-isopropylborate (123 g) in tetrahydrofuran (10 ml) at -70 °C in a nitrogen atmosphere over 30 minutes. After warming up to room temperature hydrochloric acid (10 %) is added and the

organic layer is spearated. The organic layer is washed with brine, dried and the solvent is removed by distillation. After drying in vacuo 80.4 g of (4-octoxy-3-fluorophenyl)-boronic acid are obtained as a crude solid.

Example 2

Preparation of methyl 4′-octoxy-3′-fluorobiphenyl-4-yl carboxylate

A mixture of the product of example 1 (32.2 g) and methylated spirits (50 ml) is added to a mixture of palladium tetra(triphenylphosphine) (0.06 g), toluene (200 ml), methyl 4-bromobenzoate (21.5 g) and a solution of sodium carbonate (2 M, 100 ml). The mixture is heated under reflux and stirred for 16 hours. After cooling the reaction mixture is poured into water and the organic layer is separated. The aqueous layer is extracted twice with toluene (25 ml) each time and the combined organic layers are washed once with water (50 ml). The solvent is removed, and the crude product purified by chromatography on crystallization from methylated spirits.

Example 3

Preparation of 4′-octoxy-3′-fluorobiphenyl-4-yl-carboxylic acid

A mixture of 19.5 g of the product from example 2, 8.4 g of potassium hydroxide, 30 ml of water and 100 ml of methylated spirits is stirred and heated under reflux for 2 hours. The mixture is poured into water and acidified with concentrated hydrochloric acid. The solid is filtered off, washed with water and dried in vacua. After crystallization from acetic acid 15 g of the acid are obtained as a white solid.

Example 4

Preparation of 4-heptoxy-2,3-difluorophenol

2,3-Difluorobenzene is lithiated using butyl lithium at -70 °C and converted to the boronic acid at -70 °C using trimethyl borate. Oxidation of the boronic acid gives 2,3-difluorophenol which is alkylated using an heptyl bromide, potassium carbonate and butanone. A repeat lithiation, boronation and oxidation gives the required product.

Example 5

Preparation of 4-alkyl-2-fluorophenyl 4′-alkyloxy-3′fluorobiphenyl-4-ylcarboxylates.

The product from Example 3 (5 g) and 2-fluoro-4-octylphenol (3.5 g) are added to dichloromethane (70 ml), and dicyclohexyl carbodiimide (3.3 g) is added and the mixture is stirred at room temperature for 16 hours. The reaction mixture is filtered and the solid is washed with dichloromethane (10 ml). The combined dichloromethane filtrates are washed with water and dried.

After purifying by chromatography and crystallization from methylated spirits 6.4 g of 4-octyl-2-fluorophenyl 4′-octoxy-3′-fluorobiphenyl-4-ylcarboxylate are combined as a solid, Cr 42 $S_c$ 118 N 135.0 I.

The following compounds are obtained analogously:

4-ethyl-2-fluorophenyl 4′-octoxy-3′-fluorobiphenyl-4-ylcarboxylate
4-propyl-2-fluorophenyl 4′-octoxy-3′-fluorobiphenyl-4-ylcarboxylate
4-butyl-2-fluorophenyl 4′-octoxy-3′-fluorobiphenyl-4-ylcarboxylate
4-pentyl-2-fluorophenyl 4′-octoxy-3′-fluorobiphenyl-4-ylcarboxylate
Cr 46 $S_c$ 105.6 N 144.5 I
4-hexyl-2-fluorophenyl 4′-octoxy-3′-fluorobiphenyl-4-ylcarboxylate
Cr 34 $S_c$ 112.1 N 137.9 I
4-heptyl-2-fluorophenyl 4′-octoxy-3′-fluorobiphenyl-4-ylcarboxylate
Cr 34.1 $S_c$ 115.2 N 138.5 I
4-nonyl-2-fluorophenyl 4′-octoxy-3′-fluorobiphenyl-4-ylcarboxylate
4-decyl-2-fluorophenyl 4′-octoxy-3′-fluorobiphenyl-4-ylcarboxylate
4-undecyl-2-fluorophenyl 4′-octoxy-3′-fluorobiphenyl-4-ylcarboxylate
4-dodecyl-2-fluorophenyl 4′-octoxy-3′-fluorobiphenyl-4-ylcarboxylate
4-ethyl-2-fluorophenyl 4′-hexyloxy-3′-fluorobiphenyl-4-ylcarboxylate

4-propyl-2-fluorophenyl 4′-hexyloxy-3′-fluorobiphenyl-4-ylcarboxylate
4-butyl-2-fluorophenyl 4′-hexyloxy-3′-fluorobiphenyl-4-ylcarboxylate
4-pentyl-2-fluorophenyl 4′-hexyloxy-3′-fluorobiphenyl-4-ylcarboxylate Cr 63.2 $S_c$ 87.0 N 151.3 I
4-hexyl-2-fluorophenyl 4′-hexyloxy-3′-fluorobiphenyl-4-ylcarboxylate Cr 48.0 $S_c$ 97.5 N N 143.9 I
4-heptyl-2-fluorophenyl 4′-hexyloxy-3′-fluorobiphenyl-4-ylcarboxylate Cr 50.0 $S_c$ 100.8 N 143.8 I
4-octyl-2-fluorophenyl 4′-hexyloxy-3′-fluorobiphenyl-4-ylcarboxylate Cr 44.7 $S_c$ 106.0 N 138.7 I
4-nonyl-2-fluorophenyl 4′-hexyloxy-3′-fluorobiphenyl-4-ylcarboxylate
4-decyl-2-fluorophenyl 4′-hexyloxy-3′-fluorobiphenyl-4-ylcarboxylate
4-undecyl-2-fluorophenyl 4′-hexyloxy-3′-fluorobiphenyl-4-ylcarboxylate
4-dodecyl-2-fluorophenyl 4′-hexyloxy-3′-fluorobiphenyl-4-ylcarboxylate
4-ethyl-2-fluorophenyl 4′-heptyloxy-3′-fluorobiphenyl-4-ylcarboxylate
4-propyl-2-fluorophenyl 4′-heptyloxy-3′-fluorobiphenyl-4-ylcarboxylate
4-butyl-2-fluorophenyl 4′-heptyloxy-3′-fluorobiphenyl-4-ylcarboxylate
4-pentyl-2-fluorophenyl 4′-heptyloxy-3′-fluorobiphenyl-4-ylcarboxylate Cr 61.0 $S_c$ 98.4 N 146.0 I
4-hexyl-2-fluorophenyl 4′-heptyloxy-3′-fluorobiphenyl-4-ylcarboxylate Cr 37.0 $S_c$ 106.0 N 138.9 I
4-heptyl-2-fluorophenyl 4′-heptyloxy-3′-fluorobiphenyl-4-ylcarboxylate Cr 36.0 $S_c$ 108.6 N 139.5 I
4-octyl-2-fluorophenyl 4′-heptyloxy-3′-fluorobiphenyl4-ylcarboxylate Cr 54 $S_c$ 112.0 N 134.7 I
4-nonyl-2-fluorophenyl 4′-heptyloxy-3′-fluorobiphenyl-4-ylcarboxylate
4-decyl-2-fluorophenyl 4′-heptyloxy-3′-fluorobiphenyl-4-ylcarboxylate
4-undecyl-2-fluorophenyl 4′-heptyloxy-3′-fluorobiphenyl-4-ylcarboxylate
4-dodecyl-2-fluorophenyl 4′-heptyloxy-3′-fluorobiphenyl-4-ylcarboxylate
4-ethyl-2-fluorophenyl 4′-nonyloxy-3′-fluorobiphenyl-4-ylcarboxylate
4-propyl-2-fluorophenyl 4′-nonyloxy-3′-fluorobiphenyl-4-ylcarboxylate
4-butyl-2-fluorophenyl 4′-nonyloxy-3′-fluorobiphenyl-4-ylcarboxylate
4-pentyl-2-fluorophenyl 4′-nonyloxy-3′-fluorobiphenyl-4-ylcarboxylate
4-hexyl-2-fluorophenyl 4′-nonyloxy-3′-fluorobiphenyl-4-ylcarboxylate
4-heptyl-2-fluorophenyl 4′-nonyloxy-3′-fluorobiphenyl-4-ylcarboxylate
4-octyl-2-fluorophenyl 4′-nonyloxy-3′-fluorobiphenyl-4-ylcarboxylate
4-nonyl-2-fluorophenyl 4′-nonyloxy-3′-fluorobiphenyl-4-ylcarboxylate
4-decyl-2-fluorophenyl 4′-nonyloxy-3′-fluorobiphenyl-4-ylcarboxylate
4-undecyl-2-fluorophenyl 4′-nonyloxy-3′-fluorobiphenyl-4-ylcarboxylate
4-dodecyl-2-fluorophenyl 4′-nonyloxy-3′-fluorobiphenyl-4-ylcarboxylate

With 3-fluoro-4-alkylphenols as starting materials the following compounds are obtained analogously:
4-ethyl-3-fluorophenyl 4′-octoxy-3′-fluorobiphenyl-4-ylcarboxylate
4-propyl-3-fluorophenyl 4′-octoxy-3′-fluorobiphenyl-4-ylcarboxylate
4-butyl-3-fluorophenyl 4′-octoxy-3′-fluorobiphenyl-4-ylcarboxylate
4-pentyl-3-fluorophenyl 4′-octoxy-3′-fluorobiphenyl-4-ylcarboxylate
4-hexyl-3-fluorophenyl 4′-octoxy-3′-fluorobiphenyl-4-ylcarboxylate
4-heptyl-3-fluorophenyl 4′-octoxy-3′-fluorobiphenyl-4-ylcarboxylate Cr 65 $S_c$ 119.5 $S_A$ 165.7 I
4-butyl-3-fluorophenyl 4′-octoxy-3′-fluorobiphenyl-4-ylcarboxylate
4-nonyl-3-fluorophenyl 4′-octoxy-3′-fluorobiphenyl-4-ylcarboxylate
4-decyl-3-fluorophenyl 4′-octoxy-3′-fluorobiphenyl-4-ylcarboxylate
4-undecyl-3-fluorophenyl 4′-octoxy-3′-fluorobiphenyl-4-ylcarboxylate
4-dodecyl-3-fluorophenyl 4′-octoxy-3′-fluorobiphenyl-4-ylcarboxylate
4-ethoxy-3-fluorophenyl 4′-octoxy-3′-fluorobiphenyl-4-ylcarboxylate
4-propoxy-3-fluorophenyl 4′-octoxy-3′-fluorobiphenyl-4-ylcarboxylate
4-butoxy-3-fluorophenyl 4′-octoxy-3′-fluorobiphenyl-4-ylcarboxylate
4-pentoxy-3-fluorophenyl 4′-octoxy-3′-fluorobiphenyl-4-ylcarboxylate
4-hexyloxy-3-fluorophenyl 4′-octoxy-3′-fluorobiphenyl-4-ylcarboxylate
4-heptyloxy-3-fluorophenyl 4′-octoxy-3′-fluorobiphenyl-4-ylcarboxylate
4-octyloxy-3-fluorophenyl 4′-octoxy-3′-fluorobiphenyl-4-ylcarboxylate
Cr 97 $S_c$ 147 N 180 I
4-ethyl-2-fluorophenyl 4′-heptyl-3′-fluorobiphenyl-4-ylcarboxylate
4-propyl-2-fluorophenyl 4′-heptyl-3′-fluorobiphenyl-4-ylcarboxylate
4-butyl-2-fluorophenyl 4′-heptyl-3′-fluorobiphenyl-4-ylcarboxylate
4-pentyl-2-fluorophenyl 4′-heptyl-3′-fluorobiphenyl-4-ylcarboxylate
4-hexyl-2-fluorophenyl 4′-heptyl-3′-fluorobiphenyl-4-ylcarboxylate

4-heptyl-2-fluorophenyl 4′-heptyl-3′-fluorobiphenyl-4-ylcarboxylate
4-octyl-2-fluorophenyl 4′-heptyl-3′-fluorobiphenyl-4-ylcarboxylate
4-nonyl-2-fluorophenyl 4′-heptyl-3′-fluorobiphenyl-4-ylcarboxylate
4-decyl-2-fluorophenyl 4′-heptyl-3′-fluorobiphenyl-4-ylcarboxylate
4-undecyl-2-fluorophenyl 4′-heptyl-3′-fluorobiphenyl-4-ylcarboxylate
4-dodecyl-2-fluorophenyl 4′-heptyl-3′-fluorobiphenyl-4-ylcarboxylate

The fluorinated phenyl biphenylcarboxylates of Table I are obtained analogously:

Table I:

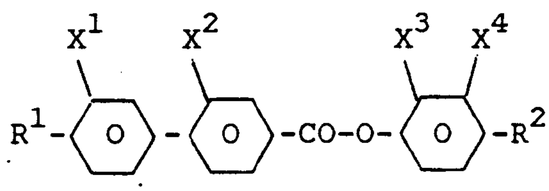

| $R^1$ | $R^2$ | $X^1$ | $X^2$ | $X^3$ | $X^4$ | Transition points |
|---|---|---|---|---|---|---|
| octyloxy | heptyl | H | H | H | F | Cr 87 $S_c$ 128.9 $S_A$ 181 I |
| octyl | octyloxy | H | H | H | F | Cr 75 $S_c$ 106.9 $S_A$ 152.5 I |
| octyloxy | octyloxy | H | H | H | F | Cr 84 $S_c$ 149.3 $S_A$ 192.4 I |
| octyloxy | octyl | H | F | H | H | Cr 80 $S_c$ 108 $S_A$ 129 N 143 I |
| octyloxy | octyloxy | H | F | H | H | Cr 87 $S_c$ 140.5 $S_A$ 164 I |
| 2-methyl-butyl | octyloxy | H | H | F | H | Cr 71 N 180 I |
| octyloxy | octyl | H | F | F | H | Cr 47 $S_c$ 53 N 123 I |
| octyloxy | octyloxy | H | F | F | H | Cr 81.5 $S_c$ 127.8 N 156.2 I |
| octyloxy | hexyl | F | H | H | H | Cr 80 $S_c$ 135 $S_A$ 167 I |
| octyloxy | heptyl | F | H | H | H | Cr 88.5 $S_c$ 137.7 $S_A$ 186.3 I |
| octyloxy | octyl | F | H | H | H | Cr 85 $S_c$ 139.4 $S_A$ 163.5 I |
| octyloxy | hexyloxy | F | H | H | H | Cr 90 $S_c$ 164.3 $S_A$ 186.9 I |
| octyloxy | heptyloxy | F | H | H | H | Cr 86 $S_c$ 167.3 $S_A$ 184 I |
| octyloxy | octyloxy | F | H | H | H | Cr 93 $S_c$ 167.5 $S_A$ 187.4 I |
| octyloxy | pentyloxy | H | H | H | F | Cr 72 $S_c$ 129.8 N 181.4 I |
| octyl | pentyloxy | H | H | H | F | Cr 61.7 $S_c$ 85.4 N 152.1 I |
| octyloxy | heptyloxy | F | H | F | F | Cr 60 $S_c$ 150 $S_A$ 155 N 157 I |
| octyloxy | heptyloxy | H | H | F | F | Cr 94 $S_c$ 156.9 $S_A$ 166.2 N 174.7 I |
| octyl | heptyloxy | H | H | F | F | Cr 86 $S_c$ 125.2 $S_A$ 131.2 N 145.5 I |
| heptyl | heptyl | F | H | F | H | |

Example 6

Preparation of 4-alkyloxy-3-fluorophenyl 4-alkyloxybenzoates

p-Hexyloxybenzoic acid (3.3 g) and 3-fluoro-4-octyloxyphenol (3.7 g) are added to a mixture of dicyclohexyl carbodiimide (3.3 g) and dichloromethane (70 ml). After storage at room temperature for 16 hours the mixture is filtered and the solid is washed with dichloromethane (10 ml). The combined filtrates are washed with water and dried over anhydrous magnesium sulfate. After purifying by chromatography and crystallization 3.5 g of 3-fluoro-4-octyloxyphenyl p-hexyloxybenzoate are obtained as a solid, Cr. 44.6 °C $S_A$ 69.0 °C N 71.6 °C I.

The following compounds are obtained analogously:
3-fluoro-4-octyloxyphenyl p-ethyloxybenzoate
3-fluoro-4-octyloxyphenyl p-propyloxybenzoate
3-fluoro-4-octyloxyphenyl p-butyloxybenzoate
3-fluoro-4-octyloxyphenyl p-pentyloxybenzoate 3-fluoro-4-octyloxyphenyl p-heptyloxybenzoate
Cr 57.7 $S_A$ (47.8) $S_C$ 72.1 I
3-fluoro-4-octyloxyphenyl p-octyloxybenzoate
Cr 56.2 $S_A$ (55.2) $S_C$ 77.7 I
3-fluoro-4-octyloxyphenyl p-nonyloxybenzoate
Cr 63.1 $S_A$ 65.6 $S_C$ 78.2 I
3-fluoro-4-octyloxyphenyl p-decyloxybenzoate
3-fluoro-4-octyloxyphenyl p-undecyloxybenzoate
3-fluoro-4-octyloxyphenyl p-dodecyloxybenzoate
3-fluoro-4-octyloxyphenyl p-ethylbenzoate
3-fluoro-4-octyloxyphenyl p-propylbenzoate
3-fluoro-4-octyloxyphenyl p-butylbenzoate
3-fluoro-4-octyloxyphenyl p-pentylbenzoate
3-fluoro-4-octyloxyphenyl p-hexylbenzoate
3-fluoro-4-octyloxyphenyl p-heptylbenzoate
3-fluoro-4-octyloxyphenyl p-octylbenzoate
Cr 42.5 I
3-fluoro-4-octyloxyphenyl p-nonylbenzoate
3-fluoro-4-heptyloxphenyl p-ethylbenzoate
3-fluoro-4-heptyloxphenyl p-propylbenzoate
3-fluoro-4-heptyloxyphenyl p-butylbenzoate
3-fluoro-4-heptyloxyphenyl p-pentylbenzoate
3-fluoro-4-heptyloxyphenyl p-hexylbenzoate
3-fluoro-4-heptyloxyphenyl p-heptylbenzoate
3-fluoro-4-heptyloxyphenyl p-octylbenzoate
3-fluoro-4-heptyloxyphenyl p-nonylbenzoate
3-fluoro-4-hexyloxyphenyl p-ethyloxybenzoate
3-fluoro-4-hexyloxyphenyl p-propyloxybenzoate
3-fluoro-4-hexyloxyphenyl p-butyloxybenzoate
3-fluoro-4-hexyloxyphenyl p-pentyloxybenzoate
3-fluoro-4-hexyloxyphenyl p-hexyloxybenzoate
Cr 39.5 $S_c$ (32.5) $S_A$ 66.1 N 70 I
3-fluoro-4-hexyloxyphenyl p-heptyloxybenzoate
Cr 52 $S_c$ (49) $S_A$ 70.2 I
3-fluoro-4-hexyloxyphenyl p-octyloxybenzoate
Cr 53.1 S 53.6 $S_A$ 76.7 I
3-fluoro-4-hexyloxyphenyl p-nonyloxybenzoate
Cr 51.4 S 61.4 $S_A$ 77.4 I
3-fluoro-4-hexyloxyphenyl p-decyloxybenzoate
3-fluoro-4-hexyloxyphenyl p-undecyloxybenzoate
3-fluoro-4-hexyloxyphenyl p-dodecyloxybenzoate
3-fluoro-4-heptyloxyphenyl p-ethyloxybenzoate
3-fluoro-4-heptyloxyphenyl p-propyloxybenzoate
3-fluoro-4-heptyloxyphenyl p-butyloxybenzoate
3-fluoro-4-heptyloxyphenyl p-pentyloxybenzoate

3-fluoro-4-heptyloxyphenyl p-hexyloxybenzoate
Cr 51.3 $S_A$ 67.9 N 69.9 I
3-fluoro-4-heptyloxyphenyl p-heptyloxybenzoate
Cr 66.9 $S_c$ (49.0) $S_A$ 70.6 I
3-fluoro-4-heptyloxyphenyl p-octyloxybenzoate
Cr 60.3 $S_c$ (52) $S_A$ 73.3 I
3-fluoro-4-heptyloxyphenyl p-nonyloxybenzoate
Cr 67 $S_c$ (64.5) $S_A$ 77 I
3-fluoro-4-heptyloxyphenyl p-decyloxybenzoate
3-fluoro-4-heptyloxyphenyl p-undecyloxybenzoate
3-fluoro-4-heptyloxyphenyl p-dodecyloxybenzoate
3-fluoro-4-nonyloxyphenyl p-ethyloxybenzoate
3-fluoro-4-nonyloxyphenyl p-propyloxybenzoate
3-fluoro-4-nonyloxyphenyl p-butyloxybenzoate
3-fluoro-4-nonyloxyphenyl p-pentyloxybenzoate
3-fluoro-4-nonyloxyphenyl p-hexyloxybenzoate
Cr 58.5 $S_A$ 67.1 N 70 I
3-fluoro-4-nonyloxyphenyl p-heptyloxybenzoate
Cr 70.5 $S_A$ 71.7 I
3-fluoro-4-nonyloxyphenyl p-octyloxybenzoate
Cr 64.5 $S_c$ (51.7) $S_A$ 77.0 I
3-fluoro-4-nonyloxyphenyl p-nonyloxybenzoate
Cr 73.2 $S_c$ (65.6) $S_A$ 77.6 I
3-fluoro-4-nonyloxyphenyl p-decyloxybenzoate
3-fluoro-4-nonyloxyphenyl p-undecyloxybenzoate
3-fluoro-4-nonyloxyphenyl p-dodecyloxybenzoate

## Example 7

Preparation of 4-alkyloxyphenyl 4-alkyloxy-3-fluorobenzoates

4-Octyloxy-3-fluorobenzoic acid (obtained from 2-fluorophenol[1] ) (2.86 g) and 4-octyloxyphenol (2.25 g) are treated with dicyclohexyl carbodiimide as described in Example 3. 3.48 g of 4-octyloxyphenyl 4-octyloxy-3-fluoro-benzoate are obtained as a solid, Cr 63.5 $S_c$ 69.7 N 75.4 I

The following compounds are obtained analogously:
4-ethyloxyphenyl 4-octyloxy-3-fluorobenzoate
4-propyloxyphenyl 4-octyloxy-3-fluorobenzoate
4-butyloxyphenyl 4-octyloxy-3-fluorobenzoate
4-pentyloxyphenyl 4-octyloxy-3-fluorobenzoate
4-hexyloxyphenyl 4-octyloxy-3-fluorobenzoate
4-heptyloxyphenyl 4-octyloxy-3-fluorobenzoate
4-nonyloxyphenyl 4-octyloxy-3-fluorobenzoate
4-octylphenyl 4-octyloxy-3-fluorobenzoate
Cr 62 I
4-heptyl-2-fluorophenyl 4-octyloxy-3-fluorobenzoate
Cr 37.1 N (24.3) I
4-ethyloxyphenyl 4-heptyloxy-3-fluorobenzoate
4-propyloxyphenyl 4-heptyloxy-3-fluorobenzoate
4-butyloxyphenyl 4-heptyloxy-3-fluorobenzoate
4-pentyloxyphenyl 4-heptyloxy-3-fluorobenzoate
4-hexyloxyphenyl 4-heptyloxy-3-fluorobenzoate
4-heptyloxyphenyl 4-heptyloxy-3-fluorobenzoate
4-nonyloxyphenyl 4-heptyloxy-3-fluorobenzoate
Lit[1] : D. Coates Liquid Crystal Vol. 2 (4) p 423-428, 1987 and refs therein

The following fluorinated phenyl benzoates are obtained analogously:

Table II

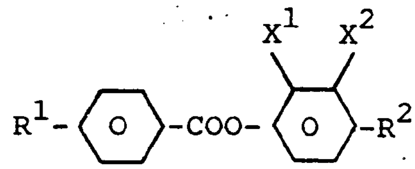

| $R^1$ | $R^2$ | $X^1$ | $X^2$ | Transition temperatures |
|---|---|---|---|---|
| octyl | heptyl | H | F | Cr 23 $S_A$ (15) I |
| octyloxy | heptyl | H | F | Cr 37 $S_A$ 58 I |
| octyl | octyloxy | F | H | Cr 37 N (34.2) I |
| octyloxy | octyloxy | F | H | Cr 48 $S_c$ (19) N 65.2 I |
| octyloxy | pentyloxy | F | H | Cr 63.5 $S_c$ 69.7 N 75.4 I |

Example 8

A liquid crystal mixture is formulated containing the following compounds
33.3 % of 4-pentyl-2-fluorophenyl 4′-octoxy-3′-fluorobiphenyl-4-ylcarboxylate
33.3 % of 4-hexyl-2-fluorophenyl 4′-octoxy-3′-fluorobiphenyl-4-ylcarboxylate
33.3 % of 4-heptyl-2-fluorophenyl 4′-octoxy-3′-fluorobiphenyl-4-ylcarboxylate
Cr 32 °C $S_c$ 113 °C N 143 °C I

Example 9

A liquid crystal phase (coded MBF 609) consisting of
33.3 % of 4-pentyl-2-fluorophenyl-4′-octylbiphenyl-4-ylcarboxylate
33.3 % of 4-pentyloxy-2-fluorophenyl-4′-octylbiphenyl-4-ylcarboxylate
33-3 % of 4-heptyloxy-2-fluorophenyl-4′-heptylbiphenyl-4-ylcarboxylate
is doped with different fluorophenyl benzoates. The doped mixture consists of 10 % of the following additives (A1 to A4) each time:
A1: 4-octyloxy-3-fluorophenyl-4-octyloxybenzoate
A2: 4-octyloxy-3-fluorophenyl-4-octylbenzoate
A3: 4-hexyloxyphenyl-4-octyloxybenzoate
A4: 4-pentyl-2-fluorophenyl-4-octyloxybenzoate

Table III Transition temperatures (°C) of host (MBF 609) with different additives

| Additive | % | $S_I$ | | $S_C$ | | $S_A$ | | N | | I |
|---|---|---|---|---|---|---|---|---|---|---|
| - | 0 | | 26 | | 106 | | 111 | | 154 | |
| A1 | 10 | | 14 | | 97.5 | | 106 | | 142 | |
| A2 | 10 | | 16 | | 93 | | 101 | | 140 | |
| A3 | 10 | | 25 | | 97 | | 104 | | 142 | |
| A4 | 10 | | 11 | | - | | 95 | | 147 | |

Table III illustrates the advantage of compounds A1 compared to a) other fluoro compounds (A2, A4), b) non-fluoro compounds (A3). A1 depresses the $S_I$-$S_C$ while still retaining on high $S_C$-$S_A$.

Example 11

A liquid crystal mixture is formulated containing the following compounds:
25.67 % of 4-heptyl-2-fluorophenyl 4′-octyloxy 3′-fluorobiphenyl-4-ylcarboxylate
21.37 % of 4-heptyl-2-fluorophenyl 4′-octyloxy 2′,3′-difluorobiphenyl-4-ylcarboxylate
25.67 % of 3-methylpentyl 4′-octyloxy-2′,3′-difluorobiphenyl-4-ylcarboxylate
12.67 % of 4′-octyloxy-2′,3′-difluorobiphenyl-4-yl trans-4-heptylcyclohexylcarboxylate
3.84 % of 4-heptyl-3-fluorophenyl 4-octylbenzoate
7.74 % of 4-pentyl-2-fluorophenyl 4-octyloxybenzoate
2.4 % of optically active 1-cyanoethyl 4′-octyloxy-3′-fluorobiphenyl 4-yl carboxylate
0.55 % of optically active 1-cyano-2-methylbutyl 4′-octyloxy-3′-fluorobiphenyl-4-ylcarboxylate
and exhibits the following properties:
$S_c$* 61.4 $S_A$ 75.3 Ch 89 I, $P_s$ 8.4 nC $cm^{-2}$
and $S_c$*-tilt of 22.5 ° at 30 °C
Response times (μsec)
89 (10 v/μm), 52 (15 v/μm) and 37 (20 v/μm)

Examples 12

A liquid crystal mixture is formulated containing the following compounds:
17.2 % of 4-pentyloxy-4"-(4-methylhexyl)-2′-fluoro-p-terphenyl
17.19 % of 4-heptyloxy-4"-(4-methylhexyl)-2′-fluoro-p-terphenyl
17.19 % of 4-octyloxy-4"-pentyl-2′-fluoro-p-terphenyl
14.17 % of 4′-octyloxy-3′-fluoro-biphenyl-4-yl trans-4-heptylcyclohexylcarboxylate
14.5 % of 4-pentyl-2-fluorophenyl octyloxybenzoate
10.0 % of 4-octyloxy-3-fluorophenyl octyloxybenzoate
6.5 % of otpically active S-1-cyanoethyl 4′-octyloxy-3′-fluorobiphenyl-4-ylcarboxylate
3.25 % of optically active S-1-cyano2-methylpropyl 4′-octyloxy-3′-fluorobiphenyl-4-ylcarboxylate
and exhibits the following properties:
$S_c$* 60.8 $S_A$ 86.3 Ch 100.8 I

| Temp. (°C) | Ps (nC $cm^{-2}$) | $S_c$ tilt (°) |
|---|---|---|
| 0 | 34.4 | 23 |
| 10 | 32.2 | 22.5 |
| 20 | 27.6 | 22 |
| 30 | 25.6 | 21.5 |
| 40 | 21.3 | 19.5 |
| 50 | 15.6 | 18.5 |
| 60 | 4.2 | 10 |

Using a liquid crystal electro-optic cell of known construction the mixture of example 10 shows the following response times (switching times are measured in a cell of 2 μm space)

Response Times

| Applied Voltage | 5 v/µm | 10 v/µm | 20 v/µm |
|---|---|---|---|
| Temperature | | | |
| 10 ° | 71 | 42 | 20 |
| 20 ° | 38 | 21 | 11 |
| 30 ° | 33 | 17 | 9 |
| 40 ° | 19 | 10 | 5 |

Example 13

A liquid crystal mixture is formulated containing the following compounds:
17 % of 4-heptyl-2-fluorophenyl 4′-octyloxy-3′-fluorobiphenyl-4-ylcarboxylate
17 % of 4′-octyloxy-2′,3′-difluorobiphenyl-4-yl trans-4-heptylcyclohexylcarboxylate
17 % of 4′-octyloxy-3′-fluorobiphenyl-4-yl trans-4-heptyl-cyclohexylcarboxylate
17 % of 4′-octyloxy-2′,3′-difluorobiphenyl-4-yl 4-methylhexanoate
11 % of 4-octyloxy-3-fluorophenyl 4-octyloxybenzoate
14 % of 4-pentyl-2-fluorophenyl 4-octyloxybenzoate
5.6 % of optically active S-1-cyanoethyl 4′-octyloxy-3′-fluorobiphenyl-4-ylcarboxylate
1.4 % of optically active S-1-cyano-2-methylpropyl 4′-octyloxy-3′-fluorobiphenyl-4-ylcarboxylate
and exhibits the following properties:
$S_c$* 60.3 $S_A$ 72.2 Ch 90 I

| Temperature (°C) | Ps ($nCcm^{-2}$) | $S_C$*tilt (°) | Response time (µsec) at 10 V/µm |
|---|---|---|---|
| 20 | 22.2 | 22.5 | 35 |
| 30 | 18.7 | 21 | 24 |

**Claims**

1. Chiral tilted smectic liquid crystal medium comprising at least two liquid crystalline compounds, wherein at least one compound is of the formula I

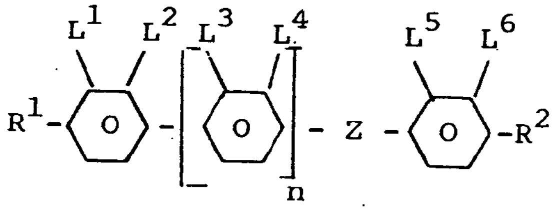

I

wherein
$R^1$ and $R^2$ are each alkyl with 1-15 C atoms, and wherein one or two non-adjacent $CH_2$ groups can also be replaced by a bridging element selected from the group consisting of -O-, -S-, -CHHalogen-, -CHCN-, -CH=CH-, and combinations of these bridging elements, with the proviso that two hetero atoms are not directly linked,
Z is -CO-O-, -O-CO-, $-CH_2O-$, $-O-CH_2-$ or $-CH_2CH_2-$,
n is 0 or 1, and
$L^1$ through $L^6$ are each hydrogen or fluorine, at least one of $L^1$ through $L^4$ being fluorine with the provisos that

a) one of $L^5$ and $L^6$ is fluorine and the other is hydrogen and one of $L^1$ and $L^2$ is hydrogen and the other is fluorine or hydrogen, if n = 0 and Z is -CO-O-, and

b) one of $L^1$ and $L^2$ is fluorine and the other is hydrogen and one of $L^5$ and $L^6$ is hydrogen and the other is fluorine or hydrogen, if n = 0 and Z is -O-CO-.

2. Medium according to Claim 1, characterized in that in formula I Z is -CO-O-, $R^1$ is alkyl or alkoxy with 5 to 15 C atoms and $R^2$ is alkoxy with 5 to 15 C atoms.

3. Medium according to Claim 1 characterized in that $L^6$ in formula I is fluorine.

4. Medium of Claim 1, wherein at least one compound is of formula I, wherein at least two of $L^1$ through $L^6$ are fluorine.

5. Medium of Claim 1 or 4, wherein at least one compound is of the formula I, wherein one of $L^5$ and $L^6$ is fluorine and the other radical $L^5$ or $L^6$ is hydrogen, one of $L^1$ and $L^4$ is fluorine and the other radical $L^1$ or $L^4$ is hydrogen, and $L^2$ and $L^3$ are hydrogen.

6. Medium of at least one of Claims 1, 4 and 5, wherein at least one compound is of the formula I, wherein Z is -CO-O- or -O-CO-.

7. Medium of Claim 6, wherein at least one compound is of the formula I, wherein Z is -CO-O-.

8. Medium of Claim 1 comprising non-chiral compounds of formula I.

9. Medium of Claim 1 comprising at least one chiral compound of formula I.

10. Medium of Claim 8, wherein at least one compound is of the formula I, wherein $R^1$ and $R^2$ are selected from the group consisting of alkyl, alkyl-O, alkyl-CO-, alkyl-CO-O-, alkyl-O-CO- and alkyl-O-CO-O-.

11. Medium of Claim 10, wherein alkyl is straight-chain alkyl of 6 to 12 carbon atoms.

12. Medium of Claim 8, wherein $R^1$ is alkyl-O- and $R^2$ is alkyl.

13. Medium according to at least one of the claims 1 to 12, characterized in that it contains at least one compound selected from the formulae 1 to 6,

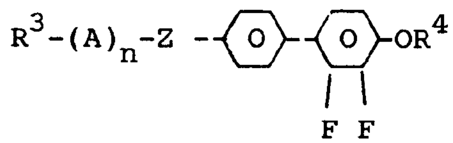

1

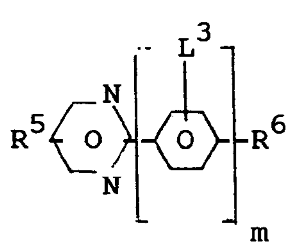

2

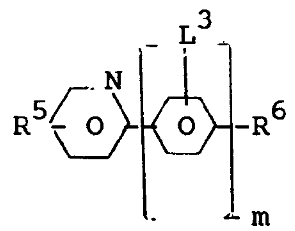

3

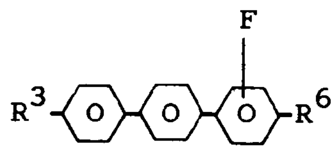

4

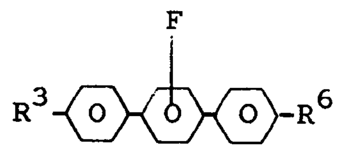

5

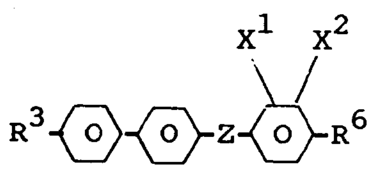

6

wherein $R^3$, $R^6$ are each alkyl or alkoxy with 5 to 15 C atoms, Z is -CO-O-, -O-CO- or a single bond, $X^1$ , $X^2$ and $L^3$ are each hydrogen or fluorine, $R^4$ and $R^5$ is alkyl with 5 to 15 C atoms, m is 1 or 2, n is 0 or 1, and A is 1,4-cyclohexylene or 1,4-bicyclo [2.2.2.]octylene.

14. Medium according to at least one of the claims 1 to 13, characterized in that it contains at least one chiral dopant of the formula VI

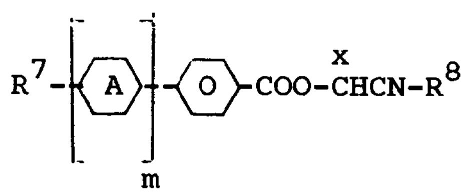

VI

wherein $R^7$ is alkyl or alkoxy with 5 to 15 C atoms, $R^8$ is alkyl with 1 to 8 C atoms, m is 1 or 2, and A is 1,4-phenylene optionally substituted by fluorine, pyridine-2,5-diyl, pyrimidine-2,5-diyl or trans-1,4-cyclohexylene.

15. Medium according to Claim 1 characterized in that it contains a trifluorinated biphenylcarboxylates of the formula Ic

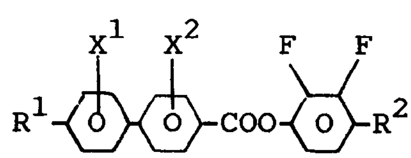

Ic

wherein $R^1$ and $R^2$ have the meaning given in Claim 1 and $X^1$ and $X^2$ are each hydrogen or fluorine at least one of $X^1$ and $X^2$ being fluorine.

16. Fluorinated phenyl benzoates of the formula Ia

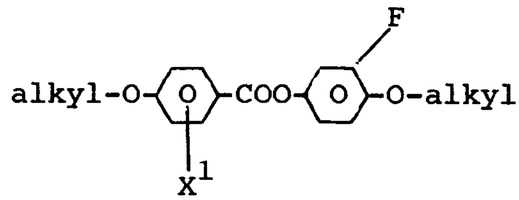

Ia

wherein each alkyl independently from each other denotes an alkyl group with 5 to 15 C atoms, and wherein one $CH_2$-group can also be replaced by -O-, -S-, -CO-, -CO-O-, -O-CO- or -CH=CH, with the proviso that two heteroatoms are not directly linked, and $X^1$ is fluorine or hydrogen.

17. Phenyl benzoates according to Claim 16, characterized in that each alkyl independently from each other denotes a straight-chain alkyl group with 5 to 15 C atoms

18. Fluorinated biphenylcarboxylates of the formula

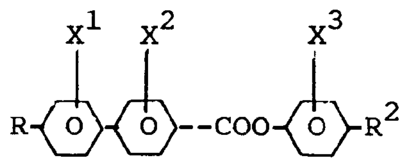

Ib

wherein $R^1$ and $R^2$ have the meaning given in Claim 1 and $X^1$ through $X^3$ are each hydrogen or fluorine at least two of $X^1$ through $X^1$ and $X^3$ being fluorine.

19. Ferroelectric electrooptical display element, characterized in that it contains a medium according to at least one of the claims 1 to 15 as the dielectric.

**Patentansprüche**

1. Chiral geneigtes, smektisches Flüssigkristallmedium aus mindestens zwei flüssigkristallinen Verbindungen, worin mindestens eine Verbindung die Formel I aufweist

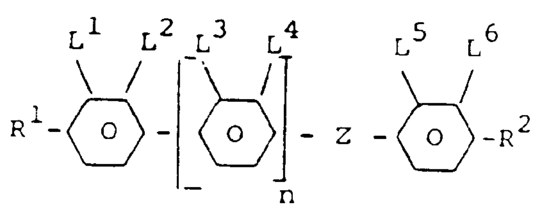

I

worin

$R^1$ und $R^2$ jeweils Alkyl mit 1-15 C-Atomen, wobei eine oder zwei nicht benachbarte $CH_2$-Gruppen auch durch ein brückenbildendes Element ausgewählt aus der Gruppe -O-, -S-,

-CHHalogen-, CHCN-, -CH=CH-, sowie Kombinationen dieser brückenbildenden Elemente ersetzt sein können, mit der Maßgabe, daß zwei Heteroatome nicht direkt miteinander verknüpft sind,

Z -CO-O-, -O-CO-, $-CH_2O-$, $-O-CH_2-$ oder $-CH_2CH_2-$,

n 0 oder 1,

$L^1$ bis $L^6$ jeweils Wasserstoff oder Fluor bedeuten, wobei mindestens eins von $L^1$ bis $L^4$ Fluor ist, mit der Maßgabe, daß

a) eins von $L^5$ und $L^6$ Fluor und das andere Wasserstoff und eins von $L^1$ und $L^2$ Wasserstoff und das andere Fluor oder Wasserstoff ist, falls n = 0 und Z -CO-O-bedeutet,

b) eins von $L^1$ und $L^2$ Fluor und das andere Wasserstoff und eins von $L^5$ und $L^6$ Wasserstoff und das andere Fluor oder Wasserstoff ist, falls n = 0 und Z -O-CO-bedeutet.

2. Medium nach Anspruch 1, dadurch gekennzeichnet, daß in Formel I Z -CO-O-, $R^1$ Alkyl oder Alkoxy mit

5 bis 15 C-Atomen und $R^2$ Alkoxy mit 5 bis 15 C-Atomen bedeuten.

3. Medium nach Anspruch 1, dadurch gekennzeichnet, daß $L^6$ in Formel I Fluor bedeutet.

4. Medium nach Anspruch 1, worin mindestens eine Verbindung die Formel I aufweist, worin mindestens zwei von $L^1$ bis $L^6$ Fluor bedeuten.

5. Medium nach Anspruch 1 oder 4, worin mindestens eine Verbindung die Formel I aufweist, worin eins von $L^5$ und $L^6$ Fluor und der andere Rest $L^5$ oder $L^6$ Wasserstoff, eins von $L^1$ und $L^4$ Fluor und der andere Rest $L^1$ oder $L^4$ Wasserstoff, und $L^2$ und $L^3$ Wasserstoff bedeuten.

6. Medium nach mindestens einem der Ansprüche 1, 4 und 5, worin mindestens eine Verbindung die Formel I aufweist, in der Z -CO-O- oder -O-CO- bedeutet.

7. Medium nach Anspruch 6, worin mindestens eine Verbindung die Formel I aufweist, in der Z -CO-O-bedeutet.

8. Medium nach Anspruch 1 aus nichtchiralen Verbindungen der Formel I.

9. Medium nach Anspruch 1 aus mindestens einer chiralen Verbindung der Formel I.

10. Medium nach Anspruch 8, worin mindestens eine Verbindung die Formel I aufweist, in der $R^1$ und $R^2$ aus der Gruppe Alkyl, Alkyl-O-, Alkyl-CO-,
Alkyl-CO-O-, Alkyl-O-CO- und Alkyl-O-CO-O- ausgewählt sind.

11. Medium nach Anspruch 10, worin Alkyl geradkettiges Alkyl mit 6 bis 12 Kohlenstoffatomen ist.

12. Medium nach Anspruch 8, worin $R^1$ Alkyl-O- und $R^2$ Alkyl bedeuten.

13. Medium nach mindestens einem der Ansprüche 1 bis 12, dadurch gekennzeichnet, daß es mindestens eine Verbindung ausgewählt aus den Formeln 1 bis 6

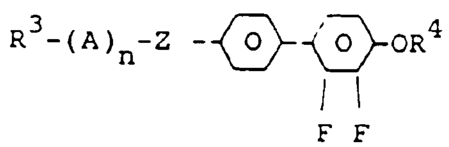

1

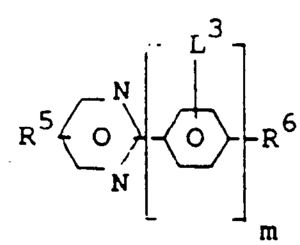

2

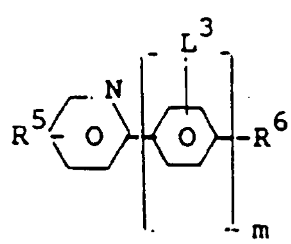

3

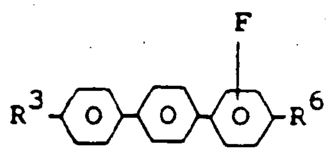

4

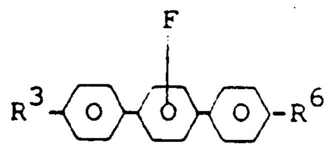

5

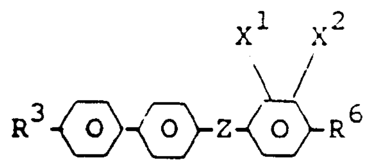

6

worin $R^3$, $R^6$ jeweils Alkyl oder Alkoxy mit 5 bis 15 C-Atomen, Z -CO-O-, -O-CO- oder eine Einfachbindung, $X^1$, $X^2$ und $L^3$ jeweils Wasserstoff oder Fluor, $R^4$ und $R^5$ Alkyl mit 5 bis 15 C-Atomen, m 1 oder 2, n 0 oder 1, und A 1,4-Cyclohexylen oder 1,4-Bicyclo[2.2.2.]-octylen bedeuten, enthält.

14. Medium nach mindestens einem der Ansprüche 1 bis 13, dadurch gekennzeichnet, daß es mindestens eine chirale Dotierungssubstanz der Formel VI

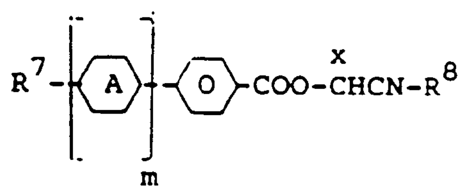

VI

worin $R^7$ Alkyl oder Alkoxy mit 5 bis 15 C-Atomen, $R^8$ Alkyl mit 1 bis 8 C-Atomen, m 1 oder 2, und A gegebenenfalls durch Fluor substituiertes 1,4-Phenylen, Pyridin-2,5-diyl, Pyrimidin-2,5-diyl oder trans-1,4-Cyclohexylen bedeuten, enthält.

15. Medium nach Anspruch 1, dadurch gekennzeichnet, daß es trifluorierte Biphenylcarboxylate der Formel Ic

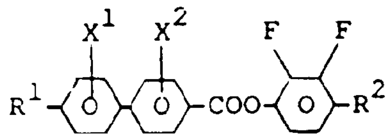

Ic

worin $R^1$ und $R^2$ die in Anspruch 1 angegebene Bedeutung besitzen und $X^1$ und $X^2$ jeweils Wasserstoff oder Fluor bedeuten, wobei mindestens eins von $X^1$ und $X^2$ Fluor bedeutet, enthält.

16. Fluorierte Benzoesäurephenylester der Formel Ia

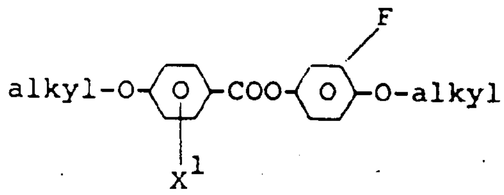

Ia

worin Alkyl jeweils unabhängig voneinander eine Alkylgruppe mit 5 bis 15 C-Atomen, wobei eine $CH_2$-Gruppe auch durch -O-, -S-, -CO-, -CO-O-, -O-CO- oder -CH=CH- ersetzt sein kann, mit der Maßgabe, daß zwei Heteroatome nicht direkt miteinander verknüpft sind, und $X^1$ Fluor oder Wasserstoff bedeuten.

17. Benzoesäurephenylester nach Anspruch 16, dadurch gekennzeichnet, daß Alkyl jeweils unabhängig voneinander eine geradkettige Alkylgruppe mit 5 bis 15 C-Atomen bedeutet.

18. Fluorierte Biphenylcarboxylate der Formel Ib

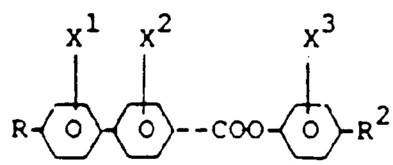

Ib

worin $R^1$ und $R^2$ die in Anspruch 1 angegebene Bedeutung besitzen und $X^1$ bis $X^3$ jeweils Wasserstoff oder Fluor bedeuten, wobei mindestens zwei von $X^1$ bis $X^3$ Fluor bedeuten.

19. Ferroelektrisches elektrooptisches Anzeigeelement, dadurch gekennzeichnet, daß es ein Medium nach mindestens einem der Ansprüche 1 bis 15 als Dielektrikum enthält.

## Revendications

1. Milieu cristal liquide smectique chiral orienté, qui comprend au moins deux composés cristallins liquides, dans lequel au moins un composé répond à la formule I

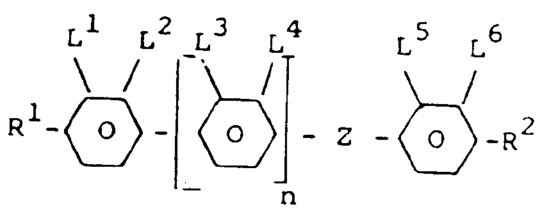

I

dans laquelle

$R^1$ et $R^2$ sont chacun un groupe alkyle avec 1 - 15 atomes de carbone, et dans laquelle un ou deux groupes $CH_2$ non adjacents peuvent aussi être remplacés par un élément pontant choisi dans le groupe comprenant -O-, -S-,

-CHhalogène-, -CHCN-, -CH=CH-, et les combinaisons de ces éléments pontants, à la condition que deux hétéroatomes ne soient pas directement liés,

Z est -CO-O-, -O-CO-, $-CH_2O-$, $-O-CH_2-$ ou $-CH_2CH_2-$,

n vaut 0 ou 1, et

$L^1$ à $L^6$ sont chacun un atome d'hydrogène ou de fluor, au moins un de $L^1$ à $L^4$ étant un atome de fluor, à condition que

a) l'un de $L^5$ et $L^6$ soit un atome de fluor et l'autre un atome d'hydrogène, et l'un de $L^1$ et $L^2$ soit un atome d'hydrogène et l'autre un atome de fluor ou d'hydrogène, si n = 0 et Z est -CO-O-, et

b) l'un de $L^1$ et $L^2$ soit un atome de fluor et l'autre un atome d'hydrogène et l'un de $L^5$ et $L^6$ soit un atome d'hydrogène et l'autre un atome de fluor ou d'hydrogène, si n = 0 et Z est -O-CO.

2. Milieu selon la revendication 1, caractérisé en ce que dans la formule I, Z est -CO-O-, $R^1$ est un groupe alkyle ou alcoxy avec 5 à 15 atomes de carbone et $R^2$ est un groupe alcoxy avec 5 à 15 atomes de carbone.

3. Milieu selon la revendication 1, caractérisé en ce que $L^6$ dans la formule I est un atome de fluor.

4. Milieu selon la revendication 1, dans lequel au moins un composé répond à la formule I dans laquelle au moins deux des $L^1$ à $L^6$ sont un atome de fluor.

5. Milieu selon la revendication 1 ou 4, dans lequel au moins un composé répond à la formule I, dans laquelle l'un de $L^5$ et $L^6$ est un atome de fluor et l'autre radical $L^5$ ou $L^6$ est un atome d'hydrogène, l'un des $L^1$ et $L^4$ est un atome de fluor et l'autre radical $L^1$ ou $L^4$ est un atome d'hydrogène, et $L^2$ et $L^3$ sont un atome d'hydrogène.

6. Milieu selon au moins l'une des revendications 1, 4 et 5, dans lequel au moins un composé répond à la formule I, dans laquelle Z est -CO-O ou O-CO -.

7. Milieu selon la revendication 6, dans lequel au moins un composé répond à la formule I dans laquelle Z est -CO-O-.

8. Milieu selon la revendication 1, qui comprend des composés non chiraux de formule I.

9. Milieu selon la revendication 1, qui comprend au moins un composé chiral de formule I.

10. Milieu selon la revendication 8, dans lequel au moins un composé répond à la formule I, dans laquelle $R^1$ et $R^2$ sont choisis dans le groupe comprenant un groupe alkyle, alkyl-O,
alkyl-CO-, alkyl-CO-O-, alkyl-O-CO- et alkyl-O-CO-O-.

11. Milieu selon la revendication 10, dans lequel le groupe alkyle est un groupe alkyle à chaîne linéaire ayant 6 à 12 atomes de carbone.

12. Milieu selon la revendication 8, dans lequel $R^1$ est un groupe alkyl-O- et $R^2$ est un groupe alkyle.

13. Milieu selon au moins l'une des revendications 1 à 12, caractérisé en ce qu'il contient au moins un composé choisi parmi les formules 1 à 6,

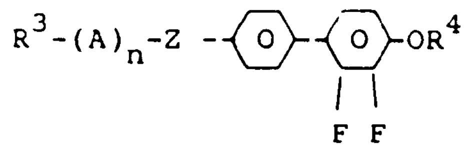
1

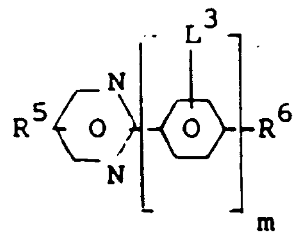
2

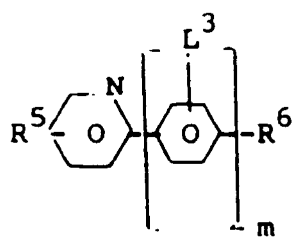
3

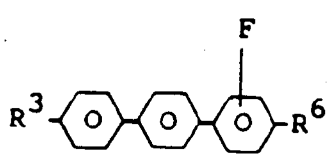
4

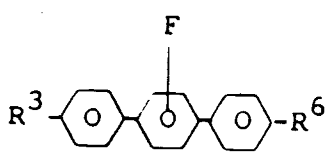
5

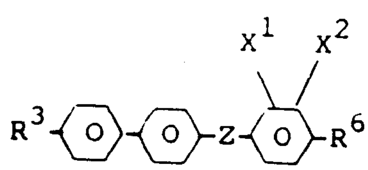
6

dans lesquelles $R^3$, $R^6$ sont chacun un groupe alkyle ou alcoxy avec 5 à 15 atomes de carbone, Z est -CO-O-, -O-CO- ou une liaison simple, $X^1$, $X^2$ et $L^3$ sont chacun un atome d'hydrogène ou de fluor, $R^4$ et $R^5$ sont un groupe alkyle avec 5 à 15 atomes de carbone, m vaut 1 ou 2, n vaut 0 ou 1, et A est un groupe 1,4-cyclohexylène ou 1,4-bicyclo(2.2.2.)octylène.

14. Milieu selon au moins l'une des revendications 1 à 13, caractérisé en ce qu'il contient au moins un agent de dopage chiral de formule VI

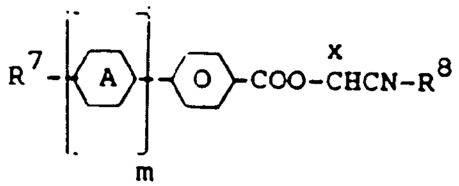

VI

dans laquelle $R^7$ est un groupe alkyle ou alcoxy avec 5 à 15 atomes de carbone, $R^8$ est un groupe alkyle avec 1 à 8 atomes de carbone, m vaut 1 ou 2 et A est un groupe 1,4-phénylène éventuellement substitué par un atome de fluor, pyridine-2,5-diyle, pyrimidine-2,5-diyle, ou trans-1,4-cyclohexylène.

15. Milieu selon la revendication 1, caractérisé en ce qu'il contient un biphénylcarboxylate trifluoré de formule Ic

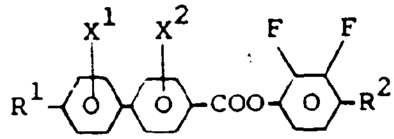

Ic

dans laquelle $R^1$ et $R^2$ ont la signification donnée dans la revendication 1, et $X^1$ et $X^2$ sont chacun un atome d'hydrogène ou de fluor, au moins l'un des $X^1$ et $X^2$ étant un atome de fluor.

16. Benzoates de phényle fluorés de formule Ia

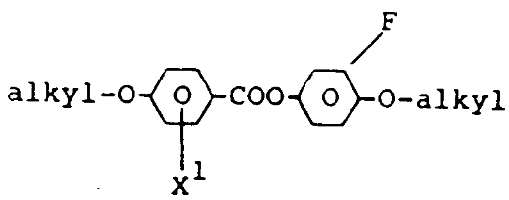

Ia

dans laquelle chaque groupe alkyle, indépendamment de tout autre, représente un groupe alkyle avec 5 à 15 atomes de carbone, et dans laquelle un groupe $CH_2$- peut aussi être remplacé par -O-, -S-, -CO-, -CO-O-, -O-CO-ou -CH=CH, à condition que deux hétéroatomes ne soient pas directement liés, et $X^1$ est un atome de fluor ou d'hydrogène.

17. Benzoates de phényle selon la revendication 16, caractérisés en ce que chaque groupe alkyle, indépendamment de tout autre, désigne un groupe alkyle à chaîne linéaire avec 5 à 15 atomes de carbone.

18. Biphénylcarboxylates fluorés de formule

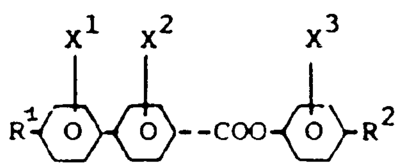

Ib

dans laquelle $R^1$ et $R^2$ ont la signification donnée dans la revendication 1 et $X^1$ à $X^3$ sont chacun un atome d'hydrogène ou de fluor, au moins deux d'entre $X^1$ à $X^3$ étant un atome de fluor.

19. Elément d'affichage électro-optique ferroélectrique, caractérisé en ce qu'il contient un milieu selon au moins l'une des revendications 1 à 15, à titre de diélectrique.